(19) Europäisches Patentamt / European Patent Office / Office européen des brevets

(11) **EP 2 956 421 B1**

(12) **FASCICULE DE BREVET EUROPEEN**

(45) Date de publication et mention de la délivrance du brevet:
**27.07.2022 Bulletin 2022/30**

(21) Numéro de dépôt: **14704590.0**

(22) Date de dépôt: **14.02.2014**

(51) Classification Internationale des Brevets (IPC):
**C03C 17/36** *(2006.01)*    **E06B 3/66** *(2006.01)*

(52) Classification Coopérative des Brevets (CPC):
**C03C 17/366; C03C 17/3618; C03C 17/3626; C03C 17/3636; C03C 17/3644; C03C 17/3649; C03C 17/3673; C03C 17/3681**

(86) Numéro de dépôt international:
**PCT/EP2014/052941**

(87) Numéro de publication internationale:
**WO 2014/125081 (21.08.2014 Gazette 2014/34)**

(54) **VITRAGE DE CONTRÔLE SOLAIRE**

SONNENSCHUTZVERGLASUNG

SOLAR CONTROL GLAZING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.02.2013  BE 201300100**
**27.06.2013  EP 13173991**

(43) Date de publication de la demande:
**23.12.2015  Bulletin 2015/52**

(73) Titulaire: **AGC Glass Europe**
**1348 Louvain-La-Neuve (BE)**

(72) Inventeurs:
• **MAHIEU, Stijn**
**B-9920 Lovendegem (BE)**
• **DUSOULIER, Laurent**
**B-4880 Aubel (BE)**

(74) Mandataire: **AGC Glass Europe**
**Technovation Centre**
**Intellectual Property Department**
**Rue Louis Blériot 12**
**6041 Gosselies (BE)**

(56) Documents cités:
WO-A1-2006/134335    WO-A1-2012/095380
DE-A1- 3 543 178    US-A1- 2006 046 089

**Description**

**1. Domaine de l'invention**

Le domaine de l'invention est celui des vitrages de contrôle solaire constitué d'un substrat verrier portant un système de couches minces, dont au moins une couche mince confère les dites propriétés de contrôle solaire. A cette couche fonctionnelle sont associées des couches diélectriques qui ont pour rôle notamment de régler les propriétés de réflexion, de transmission, de teinte et de protection contre les altérations mécaniques ou chimiques des propriétés du vitrage.

Plus précisément, l'invention concerne les vitrages destinés à garnir les bâtiments mais également les véhicules automobiles. Selon ces utilisations certaines propriétés requises peuvent différer comme expliqué plus loin.

Les fonctionnalités des vitrages de contrôle solaire sont multiples. Elles concernent notamment la prévention de l'échauffement de l'intérieur de l'habitacle d'un véhicule automobile, en particulier vis-à-vis du rayonnement solaire traversant un toit transparent, ou d'un bâtiment exposé au rayonnement solaire lorsque celui-ci est suffisamment intense. Selon certaines formes de réalisation, cette prévention de l'échauffement peut être obtenue tout en maintenant une transmission lumineuse appropriée.

Les vitrages, notamment automobiles, doivent aussi participer à l'établissement de conditions de régulation de la température en période hivernale en évitant la déperdition énergétique vers l'extérieur de l'habitacle ou du bâtiment. Les vitrages doivent ainsi présenter des propriétés bas-émissives. Ils s'opposent à l'émission de radiations énergétiques depuis l'habitacle ou le bâtiment.

Dans le cas des vitrages pour bâtiments, il est de plus demandé qu'ils soient susceptibles de supporter des traitements thermiques sans que leur couleur notamment en réflexion soit modifiée de manière sensible. L'objectif est de pouvoir disposer côte à côte des vitrages traités thermiquement et d'autres ne l'ayant pas été, sans que des différences de couleur soient manifestes.

Dans la suite de la description, les propriétés optiques sont définies pour des vitrages dont le substrat est en verre "float" ordinaire clair de 4 mm d'épaisseur. Le choix du substrat influence bien évidemment ces propriétés. Pour le verre clair ordinaire la transmission lumineuse sous 4mm, en l'absence de couche, se situe approximativement à 90% et la réflexion à 8%, mesurée avec une source conforme à l'illuminant « lumière du jour » normalisé D65 par la CIE et sous un angle solide de 2°. Les mesures énergétiques, quant à elles, sont faites suivant la norme EN 410.

Par le terme « verre », on entend désigner un verre inorganique. On entend par là un verre d'épaisseur au moins supérieure ou égale à 0,5 mm et au plus inférieure ou égale 20,0 mm, préférentiellement au moins supérieure ou égale à 1.5 mm et au plus inférieure ou égale à 10,0 mm, comprenant du silicium comme l'un des constituants indispensables de la matière vitreuse. Pour certaines applications, l'épaisseur peut par exemple être de 1,5 ou 1,6 mm, ou de 2 ou 2,1 mm. Pour d'autres applications, elle sera par exemple aux environs de 4 ou de 6 mm. On préfère les verres silico-sodocalciques clairs, extra-clairs ou colorés dans la masse ou en surface.

La présence des systèmes de couches peut poser des problèmes de couleur. Le plus souvent les constructeurs demandent que les vitrages offrent aussi bien en transmission qu'en réflexion une coloration aussi neutre que possible et donc d'apparence grise. Des colorations légèrement vertes ou bleutées sont aussi possibles. Les systèmes de couches, et en particulier les natures, indices et épaisseurs des couches diélectriques encadrant les couches fonctionnelles sont choisis, notamment pour maîtriser ces colorations.

Les vitrages automobiles, en théorie peuvent être multiples pour leur conférer une meilleure propriété d'isolation notamment thermique. En fait ces réalisations sont exceptionnelles. L'immense majorité de ces vitrages est constituée de vitrages uniques, soit monolithiques soit feuilletés. Dans ces deux cas, pour que le caractère bas-émissif s'exprime convenablement, le système de couches est nécessairement sur une face qui n'est pas à l'abri de sollicitations mécaniques ou chimiques. Les systèmes en question doivent donc présenter une très bonne résistance à ces possibles agressions.

En pratique pour limiter les risques d'altération, les systèmes de couches sont normalement sur la face du vitrage tournée vers l'habitacle. Mais même dans cette position ils doivent offrir une très bonne résistance mécanique.

Les systèmes de couches selon l'invention doivent encore se prêter aux mises en forme des vitrages. Ceux utilisés dans les véhicules sont notamment l'objet de traitements thermiques lors du formage, notamment du bombage des feuilles de verre, ou encore lors de la trempe destinée à leur conférer notamment des propriétés mécaniques renforcées. Les couches utilisées selon l'invention doivent supporter ces traitements sans que leurs propriétés soient dégradées. Des traitements de ce type imposent des températures qui dépassent 600°C pendant une dizaine de minutes. Soumis à ces températures les couches doivent conserver leurs qualités.

Dans les nombreuses applications requérant de disposer de vitrages à forte transmission lumineuse, le choix des couches fonctionnelles impose que celles-ci soient particulièrement transparentes. Le plus usuel est de sélectionner une ou plusieurs couches métalliques de très faible épaisseur : par exemple, une ou plusieurs couches d'argent disposées entre des couches diélectriques qui la (les) protègent et minimisent à la fois la réflexion et ajustent la neutralité.

DE3543178A1 suggère des couches absorbantes qui en s'oxydant vont permettre d'augmenter la transmission lumineuse. Les systèmes de couches obtenus dans l'ensemble ont pour limite une certaine fragilité notamment mécanique, même en présence de couches spécifiques de protection.

Pour les vitrages qui ne nécessitent pas une forte transmission lumineuse, et même éventuellement pour lesquels la transmission doit rester faible, le choix des systèmes de couches offre une diversité plus importante.

L'art antérieur propose des vitrages comportant des couches métalliques ou d'alliages métalliques absorbant le rayonnement solaire, de nitrures ou oxy-nitrures de divers métaux et notamment de NiCr, Mo, W, Ta, CoCr, Al, Nb, Zr. Pour permettre à ces couches métalliques de présenter une bonne résistance notamment mécanique, il est aussi proposé de disposer des couches diélectriques connues pour être relativement dures. Dans ce domaine les couches les plus usuelles sont celles de silice, $SiO_2$, et de nitrure de silicium, $Si_3N_4$.

Les propositions antérieures répondent en partie au moins aux exigences de l'utilisation envisagée des vitrages selon l'invention. Il reste néanmoins des nécessités d'amélioration notamment du point de vue de la résistance aux traitements thermiques.

L'invention a notamment pour objectif de pallier ces inconvénients de l'art antérieur.

Plus précisément, un objectif de l'invention, dans au moins un de ses modes de réalisation, est de fournir un vitrage muni d'un système de couches qui est apte à subir un traitement thermique à température élevée, de type trempe et/ou bombage, de préférence sans modification significative de sa teinte en transmission et/ou en réflexion côté substrat et/ou côté couche, de telle sorte qu'un vitrage non traité thermiquement puisse être juxtaposée avec sa version traitée thermiquement sans qu'un observateur puisse détecter une différence significative de l'aspect esthétique global.

L'invention, dans au moins un de ses modes de réalisation, a encore pour objectif de fournir un vitrage muni d'un système de couches présentant une bonne stabilité du point de vue thermique, chimique et mécanique.

L'invention, dans au moins un de ses modes de réalisation, a aussi pour objectif de fournir un vitrage dont le système de couches puisse être placé en position externe sans devoir nécessairement être protégé de l'environnement externe par un autre substrat.

**4. Exposé de l'invention**

L'invention se rapporte à un vitrage de contrôle solaire comportant sur au moins l'une des faces d'un substrat verrier un système de couches comprenant au moins une couche absorbant le rayonnement solaire et des couches diélectriques encadrant ladite couche absorbant le rayonnement solaire, caractérisé en ce que la couche absorbant le rayonnement solaire est une couche métallique à base de tungstène allié avec au moins du nickel et comprenant du chrome, le système de couches comprenant entre le substrat et la couche absorbant le rayonnement solaire au moins une couche en un matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium, et, au-dessus de la couche absorbant le rayonnement solaire, au moins une couche en un matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium.

Le principe général de l'invention repose sur la présence d'une couche métallique absorbant le rayonnement solaire qui est à base de tungstène allié avec au moins du nickel et du chrome, ladite couche étant enchâssée entre au moins deux couches à base d'au moins un matériau diélectrique sélectionné parmi l'oxyde de silicium, l'oxyde d'aluminium, les oxydes mixtes d'aluminium-silicium, le nitrure de silicium, le nitrure d'aluminium, les nitrures mixtes d'aluminium-silicium, l'oxynitrure de silicium, l'oxynitrure de d'aluminium et les oxynitrures mixtes d'aluminium-silicium. Les inventeurs ont déterminé que de manière surprenante un tel système de couches présente une bonne durabilité chimique, thermique et mécanique. En effet, la couche métallique absorbant le rayonnement solaire à base de tungstène allié avec au moins du nickel et du chrome, enchâssée entre au moins deux couches à base d'au moins un matériau diélectrique, provoque une diminution de la transmission de l'énergie solaire, ladite couche conservant ses propriétés d'absorption plus particulièrement après un traitement thermique.

Par l'expression « à base de tungstène », on entend, dans la présente description, une couche comprenant au moins 30% en poids de tungstène, de préférence au moins 35%, et avantageusement au moins 37% ou au moins 40%. La proportion de nickel dans la couche métallique absorbant le rayonnement solaire est d'au moins 9% en poids, de préférence d'au moins 20% en poids et avantageusement d'au moins 25% en poids, par exemple 30, 35 ou 40% en poids.

Par « couche métallique » pour la couche absorbant le rayonnement solaire, on entend une couche ayant un caractère essentiellement métallique. Toutefois, il n'est pas exclu que cette couche contienne éventuellement quelques traces d'azote ou d'oxygène. En effet, l'atmosphère lors du dépôt de cette couche métallique peut être constituée de gaz noble pur, par exemple 100% d'argon, ou l'atmosphère peut contenir un peu d'azote ou d'oxygène provenant des zones de dépôt voisines. Dans le cas où les couches diélectriques qui entourent la couche absorbante sont des nitrures de silicium, la cible métallique destinée à former la couche absorbante peut même être disposée dans la même chambre de dépôt, sans isolation franche avec les zones de dépôt des nitrures de silicium, car l'azote sera prioritairement attiré par le silicium. Dans ce cas, l'atmosphère environnant peut contenir un pourcentage relativement élevé d'azote, et donc, même si l'azote s'associera prioritairement avec le silicium, la couche métallique absorbante pourra contenir un peu d'azote, sans pour autant perdre son caractère métallique. Dans le cas où les couches diélectriques qui entourent la couche absorbante sont des oxydes ou oxynitrures, il peut y avoir également un peu d'oxygène provenant des zones de dépôt voisines dans l'atmosphère de dépôt.

Par « couche à base d'un matériau diélectrique », on entend également des couches dopées avec au moins un autre élément, contenant jusqu'à environ maximum 10% poids de cet autre élément, ces dernières présentant des propriétés diélectriques ne différant en pratique pas des couches consistant en ledit matériau diélectrique. Ainsi par exemple, lorsque la couche est en nitrure ou oxyde de silicium celle-ci peut contenir jusqu'à 10% en poids d'aluminium (par exemple, des couches déposées par procédé de pulvérisation cathodique à partir d'une cible de silicium contenant jusqu'à 10% poids d'aluminium). Les couches diélectriques selon l'invention peuvent en outre être constituée de plusieurs couches individuelles comprenant ou consistant essentiellement en ces mêmes matériaux. Les couches diélectriques peuvent aussi être déposées par la technique bien connue appelée PECVD (« Plasma-Enhanced Chemical Vapor Deposition ») ou dépôt chimique en phase vapeur assisté par plasma.

Ainsi, l'invention repose sur une approche tout à fait nouvelle et inventive basée sur la sélection d'une couche métallique absorbant le rayonnement solaire qui est à base de tungstène allié avec au moins du nickel.

Avantageusement, le vitrage selon l'invention est tel que la couche métallique absorbant le rayonnement solaire à base de tungstène allié avec au moins du nickel comprend également un métal supplémentaire sélectionné parmi le Ti, le Nb, le Zr, le Ta et le Cr.

Les inventeurs ont déterminé que de manière surprenante l'addition d'un composé métallique sélectionné parmi le Ti, le Nb, le Zr, le Ta et le Cr à l'alliage à base de tungstène allié avec du nickel permet d'obtenir des systèmes de couches dont la résistance thermique, chimique et mécanique se trouve améliorée.

Le vitrage selon l'invention est tel que la couche métallique à base de tungstène allié avec au moins du nickel comprend du chrome. Les inventeurs ont déterminé que de manière surprenante l'addition de Cr à l'alliage à base de de tungstène allié avec du nickel permet d'obtenir des systèmes de couches dont la résistance thermique, chimique et mécanique est tout particulièrement améliorée.

Selon un mode de réalisation préféré le vitrage selon l'invention est tel que la couche métallique absorbant le rayonnement solaire comprend de 50 à 90% en poids de tungstène, et du nickel et du chrome dans un rapport en poids de nickel/chrome compris entre 100/0 et 50/50, préférentiellement 80/20.

Les inventeurs ont déterminé que de manière surprenante la sélection d'un tel alliage permet d'obtenir des systèmes de couches dont la résistance thermique, chimique et mécanique est tout particulièrement améliorée. Les inventeurs ont en outre déterminé que de manière surprenante la couche métallique à base de tungstène allié avec au moins du nickel présente les propriétés d'absorption du rayonnement solaire tout particulièrement requises pour son utilisation au sein de systèmes de couches pour vitrages automobiles ou de bâtiments.

Selon une mode de réalisation préféré, le vitrage selon l'invention est tel que la couche métallique à base de tungstène allié avec au moins du nickel a une épaisseur géométrique d'au moins 2 nm, préférentiellement d'au moins 3 nm, et d'au plus 30 nm, préférentiellement d'au moins 3 nm et d'au plus 25 nm.

Les inventeurs ont déterminé que de manière surprenante la couche métallique à base de tungstène allié avec au moins du nickel présentant de telles épaisseurs possède des propriétés d'absorption de l'infrarouge tout particulièrement requises pour son utilisation au sein de systèmes de couches pour vitrage automobile ou de bâtiment ou comme élément vitré d'un appareil électroménager, telle une porte de four de cuisson.

De préférence, la couche métallique à base de tungstène allié avec au moins du nickel a une épaisseur géométrique d'au moins 5 nm, et de préférence d'au moins 6 nm.

Selon un mode de réalisation avantageux, le vitrage selon l'invention est tel que la couche en matériau diélectrique entre le substrat et la couche absorbant le rayonnement solaire à base de tungstène allié avec au moins du nickel a une épaisseur optique d'au moins 2 nm et d'au plus 200 nm, avantageusement d'au moins 10 nm et d'au plus 200 nm, préférentiellement d'au moins 40 nm et d'au plus 180 nm.

L'épaisseur optique d'une couche de matériau diélectrique est obtenue en multipliant l'épaisseur géométrique (physique) de la couche considérée par l'indice de réfraction du matériau la constituant.

Selon un mode préféré de réalisation le vitrage selon l'invention est tel que la couche en matériau diélectrique située au-dessus de la couche absorbant le rayonnement solaire à base de tungstène allié avec au moins du nickel a une épaisseur optique d'au moins 20 nm et d'au plus 200 nm.

Selon un premier mode de réalisation préféré, la couche métallique absorbant le rayonnement solaire est la couche fonctionnelle de base du système de couches. L'avantage de ce système de couches est d'être extrêmement simple et très résistant.

De préférence, le système de couches comprend au moins deux couches absorbant le rayonnement solaire. Cette caractéristique permet d'adapter plus facilement les propriétés optiques et thermiques du système de couches aux desiderata. Avantageusement, ces deux couches absorbant le rayonnement solaire sont séparées par une couche diélectrique, par exemple en nitrure de silicium. Une structure particulièrement appropriée est la suivante : substrat/$Si_3N_4$/NiCrW/$Si_3N_4$/NiCrW/ $Si_3N_4$.

Selon un second mode de réalisation préféré, le vitrage selon l'invention est tel que le système de couches comprend au moins une couche métallique supplémentaire à base d'argent de telle sorte que la ou chaque couche à base d'argent soit entourée d'un revêtement diélectrique. Ce revêtement diélectrique peut être formé d'un matériau tel que décrit ci-dessus en relation avec les autres formes de réalisation de l'invention. Il peut s'agir aussi de tout matériau diélectrique bien connu dans le domaine, tel que par exemple du stannate de zinc ou du ZnO, dopé ou non.

Dans ce second mode de réalisation, la couche fonctionnelle de base du système de couches est la couche à base d'argent qui réfléchit le rayonnement infrarouge, ce qui permet une meilleure efficacité du contrôle solaire tout en conservant une transmission lumineuse plus élevée et donc un gain significatif en sélectivité. L'ajout d'une couche supplémentaire à base d'argent est surprenant car ce type de couche résiste généralement mal au traitement thermique à haute température, et de plus fragilise l'ensemble du système de couches du point de vue mécanique et chimique. En général, la présence d'une couche à l'argent empêche le positionnement du système de couches en contact avec l'environnement externe et requiert la protection du système de couches à l'aide d'un substrat supplémentaire. Les inventeurs ont découvert que, de manière surprenante, l'invention permet de pallier ces inconvénients.

La combinaison d'une couche à base d'argent avec la couche absorbant le rayonnement solaire permet d'une part d'obtenir simultanément des propriétés de réflexion du rayonnement infrarouge, procurées par la couche à base d'argent, alliée à des propriétés d'absorption du rayonnement énergétique solaire.

Selon une première forme préférée de ce second mode de réalisation, au moins un des revêtements diélectriques comprend au moins deux couches diélectriques et la couche métallique absorbant le rayonnement solaire à base de tungstène allié avec au moins du nickel est insérée entre ces deux couches diélectriques de ce revêtement diélectrique. Les inventeurs ont constaté que cette configuration séparait efficacement la fonction de réflexion de l'infrarouge de la fonction d'absorption du rayonnement solaire, ce qui permet plus facilement d'optimiser les deux fonctions, en particulier lorsqu'on désire améliorer la qualité cristallographique de l'argent pour obtenir une émissivité plus faible, par exemple à l'aide d'une couche à base de ZnO sous l'argent, souvent appelée couche de mouillage, et/ou au-dessus de l'argent, sans perte de fonction d'absorption de la couche métallique absorbant le rayonnement solaire. De plus, cette disposition permet de mieux protéger la couche métallique absorbant le rayonnement solaire pendant le traitement thermique afin qu'elle conserve autant que possible intégralement sa fonction d'absorption.

De préférence, la première couche diélectrique, du premier revêtement diélectrique, déposée sur le substrat verrier, et en contact avec lui, est une couche d'oxyde mixte zinc-étain, avantageusement contenant au moins 20% d'étain, plus préférentiellement encore une couche d'oxyde mixte zinc-étain dans laquelle la proportion zinc-étain est proche du 50-50 % poids ($Zn_2SnO_4$). Cette disposition est avantageuse pour la résistance au traitement thermique à haute température. L'oxyde mixte zinc-étain forme une barrière excellente aux ions alcalins migrant du substrat verrier à la température élevée du traitement thermique, de trempe notamment. Il présente et conserve aussi une bonne adhésion vis-à-vis du substrat verrier. Il présente en outre un bon taux de dépôt, comparé, par exemple, au $SiO_2$ ou à l'$Al_2O_3$ et il présente une bonne durabilité, comparé, par exemple, au ZnO pur ou à l'oxyde de bismuth. Il peut, en outre, être avantageux en ce qu'il a moins tendance à générer un voile après traitement thermique de l'empilage, comparé, par exemple, aux oxydes de Ti ou Zr. La couche constituée d'un oxyde, en contact direct avec le substrat, présente de façon avantageuse une épaisseur d'au moins 5 nm, de préférence d'au moins 8 nm, plus préférentiellement d'au moins 10 nm. Ces valeurs d'épaisseurs minimales permettent, entre autre, d'assurer la durabilité chimique du produit non traité thermiquement, mais aussi d'assurer la résistance au traitement thermique.

De préférence, les deux dites couches diélectriques enserrant la couche métallique absorbant le rayonnement solaire à base de tungstène allié avec au moins du nickel sont à base de nitrure de silicium ou de nitrure d'aluminium. Ceci assure une très bonne protection de la couche métallique absorbant le rayonnement solaire pendant le traitement thermique à température élevée.

Des exemples préférés, mais nullement limitatifs, de cette forme de réalisation peuvent être schématiquement représentés comme suit : G/$Si_3N_4$/NiCrW/$Si_3N_4$/D/ZnO/Ag/AZO/$Si_3N_4$/ZnO/Ag/AZO/$Si_3N_4$/NiCrW/$Si_3N_4$ G/D/ZnO/Ag/AZO/D/ZnO/Ag/AZO/D/$Si_3N_4$/NiCrW/$Si_3N_4$; G/$Si_3N_4$/Ni-CrW/$Si_3N_4$/D/ZnO/Ag/AZO/D/ZnO/Ag/AZO/D/$Si_3N_4$; G/$Si_3N_4$/NiCrW/$Si_3N_4$/D/ZnO/Ag/B/D/ZnO/Ag/B/D/TiN (ou $TiO_2$) G/$Si_3N_4$/NiCrW/$Si_3N_4$/D/ZnO/Ag/AZO/D/$Si_3N_4$/D/ZnO/Ag/AZO/D/$Si_3N_4$; G/D/ZnO/Ag/AZO/D/$Si_3N_4$/Ni-CrW/$Si_3N_4$/D/ZnO/Ag/AZO/D/$Si_3N_4$; G/D/ZnO/Ag/B/D/Si3N4/NiCrW/Si3N4/D/ZnO/Ag/B/D/Si3N4 ;

G représentant le substrat, de préférence une feuille de verre sodo-calcique ordinaire ; B représentant une couche barrière contre l'oxydation de l'argent bien connue dans le domaine ; AZO représentant une couche barrière à base d'oxyde de zinc, de préférence dopé à l'aluminium, déposée à partir d'une cible (cathode) céramique d'oxyde de zinc (dopé de préférence à l'aluminium) pulvérisée en atmosphère à base d'argon avec peu ou pas d'oxygène ; D représentant une ou plusieurs couches diélectriques, notamment à base de stannate de zinc, de ZnO dopé ou non, ou d'un autre matériau connu dans le domaine et adapté à ce type d'empilage de couche, par exemple $TiO_2$, $ZrO_2$ ou leur mélange,

ou un nitrure tel qu'AlN. En variante, AZO peut être remplacé par d'autres barrières bien connues dans le domaine et adaptées aux propriétés désirées pour le système de couche formé, comme par exemple un oxyde de Ti, dopé ou non avec du niobium ou du zirconium, obtenu de préférence à partir d'une cible céramique formée de l'oxyde à déposer, ou ZnO pur. Les exemples donnés ci-dessus utilisent NiCrW comme couche absorbant le rayonnement solaire à titre d'exemples concrets, mais NiCrW peut également être remplacé par un autre matériau à base de tungstène allié à du nickel, tel que WNi ou WNiV, sous forme métallique pure ou avec des traces d'azote ou d'oxygène.

De préférence, selon cette première forme du second mode de réalisation de l'invention, le système de couches comprend, au moins une fois, la succession des couches suivantes : «nitrure de silicium ou d'aluminium ou leur mélange / couche absorbant le rayonnement solaire / nitrure de silicium ou d'aluminium ou leur mélange / oxyde transparent intercalaire / couche de mouillage à base d'oxyde de zinc / couche métallique supplémentaire à base d'argent ». On a trouvé que l'utilisation d'une couche de mouillage à base de ZnO avec l'insertion d'une couche oxyde transparent intercalaire entre la couche de nitrure protégeant la couche absorbant le rayonnement solaire et la couche de mouillage permet de réduire fortement, ou d'éviter, la formation de taches inadmissibles dans l'aspect visuel du substrat revêtu ayant subi un traitement thermique à température élevée, qui ont tendance à se former lors du traitement thermique en l'absence de cette succession spécifique de couches. On a constaté également que sans cette couche d'oxyde transparent intercalaire, la résistance électrique superficielle, et donc également l'émissivité, avait tendance à augmenter de manière indésirable suite au traitement thermique, alors que grâce à la présence de cette couche d'oxyde intercalaire l'émissivité était au moins conservée, voire réduite de manière bénéfique, à la suite du traitement thermique. La couche d'oxyde transparent intercalaire peut être un oxyde à base de ZnO, $SnO_2$, $TiO_2$, $ZrO_2$ ou leur mélange, tout en étant différente de la couche de mouillage. De préférence, la couche d'oxyde transparent intercalaire est un oxyde mixte zinc-étain contenant au moins 20% d'étain et au moins 10% de zinc.

Selon une deuxième forme préférée de ce second mode de réalisation, la couche métallique supplémentaire à base d'argent est située dans l'empilement directement sur et/ou sous la couche métallique absorbant le rayonnement solaire à base de tungstène allié avec au moins du nickel.

Les inventeurs ont déterminé que de manière surprenante la présence de la couche absorbant le rayonnement solaire permet de réduire les risques de détérioration chimique de la couche à base d'argent lorsque ladite couche à base d'argent est en contact direct avec la couche absorbant le rayonnement solaire à base de tungstène allié avec au moins du nickel.

De préférence, selon cette deuxième forme du second mode de réalisation, le vitrage selon l'invention est tel que la ou les couches métalliques à base d'argent, s'il y en a plusieurs, a ou ont une épaisseur d'au moins 9 nm, préférentiellement d'au moins 13 nm, et d'au plus 23 nm, plus préférentiellement d'au moins 15 nm et d'au plus 22 nm.

Selon ce mode de réalisation, la couche métallique absorbant le rayonnement solaire a de préférence une épaisseur géométrique comprise entre 0,5 et 8 nm, et avantageusement entre 0,5 et 5 nm.

Selon ce mode de réalisation, cette couche absorbant le rayonnement solaire peut être placée soit sous la couche supplémentaire à base d'argent, soit au-dessus de la couche à base d'argent. De préférence, elle est disposée de part et d'autre de la couche métallique supplémentaire à base d'argent, chaque couche ayant de préférence une épaisseur comprise dans la gamme indiquée ci-dessus, soit de préférence entre 0,5 et 5 nm. On a trouvé que c'est la meilleure disposition pour répartir l'absorption du rayonnement solaire de part et d'autre de la couche réfléchissant l'infrarouge.

Selon une première mise en œuvre préférée du premier mode de réalisation le vitrage selon l'invention est tel qu'il comporte sur au moins l'une des faces d'un substrat verrier un système de couches comprenant au moins successivement :

- Une couche en un matériau diélectrique à base d'au moins un composé chimique sélectionné parmi le groupe consistant en l'oxyde de silicium, l'oxyde d'aluminium, les oxydes mixtes d'aluminium-silicium, le nitrure de silicium, le nitrure d'aluminium, les nitrures mixtes d'aluminium-silicium, l'oxynitrure de silicium, l'oxynitrure de d'aluminium et les oxynitrures mixte d'aluminium-silicium, préférentiellement parmi le nitrure de silicum, le nitrure d'aluminium et les nitrures mixtes d'aluminium-silicium, la couche en matériau diélectrique ayant une épaisseur optique d'au moins 10 nm et d'au plus 200 nm, préférentiellement d'au moins 40 nm et d'au plus 180 nm,

- Une couche métallique absorbant le rayonnement solaire ladite couche métallique comprenant de 30 à 90%, de préférence de 40 à 90%, et avantageusement de 50 à 90% en poids de tungstène, et du nickel et du chrome dans un rapport en poids de nickel/chrome compris entre 100/0 et 50/50, préférentiellement 80/20, la couche métallique à base de tungstène allié avec au moins du nickel ayant une épaisseur géométrique d'au moins 2 nm, préférentiellement d'au moins 3 nm, et d'au plus 30 nm, préférentiellement d'au moins 3 nm et d'au plus 25 nm,

- Une couche en un matériau diélectrique à base d'au moins un composé chimique sélectionné parmi le groupe consistant en l'oxyde de silicium, l'oxyde d'aluminium, les oxyde mixtes d'aluminium-silicium, le nitrure de silicum, le nitrure d'aluminium, les nitrures mixtes d'aluminium-silicium, l'oxynitrure de silicium, l'oxynitrure de d'aluminium et les oxynitrures mixtes d'aluminium-silicium, préférentiellement parmi le nitrure de silicum, le nitrure d'aluminium, les nitrures mixtes d'aluminium-silicium, la couche en matériau diélectrique ayant une épaisseur optique d'au moins 20 nm et d'au plus 200 nm.

Selon une seconde mise en œuvre préférée du premier mode de réalisation, le vitrage selon l'invention est tel qu'il comporte sur au moins l'une des faces d'un substrat verrier un système de couches comprenant au moins successivement :

- Une couche en un matériau diélectrique à base d'au moins un composé chimique sélectionné parmi le groupe consistant en l'oxyde de silicium, le nitrure de silicium et l'oxynitrure de silicium, la couche en matériau diélectrique ayant une épaisseur optique d'au moins 10 nm et d'au plus 200 nm, préférentiellement d'au moins 40 nm et d'au plus 180 nm,

- Une couche métallique absorbant le rayonnement solaire ladite couche métallique comprenant de 30 à 90%, de préférence de 40 à 90%, et avantageusement de 50 à 90% en poids de tungstène, et du nickel et du chrome dans un rapport en poids de nickel/chrome compris entre 100/0 et 50/50, préférentiellement 80/20, la couche métallique à base de tungstène allié avec au moins du nickel ayant une épaisseur géométrique d'au moins 2 nm, préférentiellement d'au moins 3 nm, et d'au plus 30 nm, préférentiellement d'au moins 3 nm et d'au plus 25 nm,

- Une couche en un matériau diélectrique ayant une épaisseur optique d'au moins 20 nm et d'au plus 400 nm, de préférence entre 20 et 200 nm, à base d'au moins un composé chimique sélectionné parmi le groupe consistant en nitrure de silicium et oxynitrure de silicium.

Selon une mise en œuvre préférée de la première forme du second mode de réalisation, le système de couches comprend n couches métalliques supplémentaires à base d'argent, avec n≥1, chaque couche métallique supplémentaire à base d'argent étant entourée de couches en matériau diélectrique, et comprend au moins une fois la succession suivante de couches : « nitrure de silicium ou d'aluminium ou leur mélange / couche absorbant le rayonnement solaire / nitrure de silicium ou d'aluminium ou leur mélange / oxyde transparent intercalaire / couche de mouillage à base d'oxyde de zinc / couche métallique supplémentaire à base d'argent », dans laquelle la couche métallique supplémentaire à base d'argent a une épaisseur géométrique d'au moins 8 nm et la couche absorbant le rayonnement solaire a une épaisseur géométrique comprise entre 0,5 et 8 nm. Il peut s'agir d'un système de couches ayant deux ou trois, voire quatre, couches métalliques à base d'argent, une couche absorbant le rayonnement solaire, entourée de ses couches diélectriques spécifiques, étant disposée de préférence entre la première et la seconde couche à base d'argent en partant du substrat. On a découvert que cette succession particulière de couches permet de réduire fortement, ou d'éviter, la formation de taches colorées que l'on observe après traitement thermique lorsque cette séquence n'est pas respectée, et en particulier lorsque la couche d'oxyde transparent intercalaire n'est pas présente entre le couche de nitrure qui protège la couche absorbant le rayonnement solaire et la couche de mouillage à base de ZnO. On a constaté aussi que, grâce à la présence de cette couche d'oxyde intercalaire, la résistance électrique superficielle, et donc également l'émissivité, était au moins conservée, voire réduite de manière bénéfique, à la suite du traitement thermique au lieu d'augmenter de manière indésirable au cours du traitement thermique.

Selon une mise en œuvre préférée de la seconde forme du second mode de réalisation, le vitrage selon l'invention est tel qu'il comporte sur au moins l'une des faces d'un substrat verrier un système de couches comprenant au moins successivement :

- Une couche en un matériau diélectrique à base d'au moins un composé chimique sélectionné parmi le groupe consistant en nitrure ou oxynitrure de silicium et/ou d'aluminium, la couche en matériau diélectrique ayant une épaisseur optique d'au moins 10 nm et d'au plus 200 nm, préférentiellement d'au moins 40 nm et d'au plus 180 nm,

- Une couche métallique absorbant le rayonnement solaire ladite couche métallique comprenant de 30 à 90%, de préférence de 40 à 90%, et avantageusement de 50 à 90% en poids de tungstène, et du nickel et du chrome dans un rapport en poids de nickel/chrome compris entre 100/0 et 50/50, préférentiellement 80/20, la couche métallique à base de tungstène allié avec au moins du nickel ayant une épaisseur géométrique d'au moins 0,5 nm, préférentiellement d'au moins 1 nm, et d'au plus 8 nm, préférentiellement d'au moins 1 nm et d'au plus 5 nm,

- Une couche métallique supplémentaire à base d'argent ayant une épaisseur géométrique d'au moins 9 nm, préférentiellement d'au moins 13 nm, et d'au plus 22 nm,

- Une seconde couche métallique absorbant le rayonnement solaire ladite couche métallique comprenant de 30 à 90%, de préférence de 40 à 90%, et avantageusement de 50 à 90% en poids de tungstène, et du nickel et du chrome dans un rapport en poids de nickel/chrome compris entre 100/0 et 50/50, préférentiellement 80/20, la couche métallique à base de tungstène allié avec au moins du nickel ayant une épaisseur géométrique d'au moins 0,5 nm, préférentiellement d'au moins 1 nm, et d'au plus 8 nm, préférentiellement d'au moins 1 nm et d'au plus 5 nm,

- Une couche en un matériau diélectrique à base de nitrure ou d'oxynitrure de silicium ayant une épaisseur optique d'au moins 20 nm et d'au plus 400 nm, de préférence entre 20 et 200 nm.

Selon les quatre mises en œuvre précédentes, d'autres couches additionnelles peuvent être ajoutées, soit directement sur le substrat, soit en tant que couche externe de protection, soit à l'intérieur de l'empilage du système de couches, afin de procurer au système de couches de base des propriétés et/ou des protections supplémentaires, telles que par exemple une protection externe supplémentaire contre les agressions mécaniques ou chimiques, une barrière contre les alcali provenant du substrat, des propriétés optiques différentes, une amélioration des propriétés électriques des couches métalliques, une amélioration du taux de dépôt, ou toute fonction supplémentaire. Les couches additionnelles doivent toutefois de préférence être choisies afin qu'elles ne perturbent pas l'aptitude du système de couches à subir un traitement thermique à haute température. En particulier, on veillera avantageusement à ce que ces couches additionnelles ne subissent pas de modifications substantielles, et notamment des modifications de structure, lors du traitement thermique pour éviter qu'elles n'entraînent des modifications des propriétés optiques du système de couches au cours du traitement thermique.

Les traitements thermiques, notamment de type bombage/trempe, peuvent aussi induire des modifications plus ou moins sensibles des propriétés optiques et notamment des teintes. Préférentiellement, ces variations doivent être minimisées de telle sorte que traités ou non thermiquement les vitrages présentent une apparence pratiquement inchangée.

Traditionnellement la mesure des variations colorimétriques s'effectue à partir des coordonnées du système CIELAB. La variation colorimétrique est exprimée par l'expression notée $\Delta E^*$, expression correspondant à la formule :

$$\Delta E^* = (\Delta L^{*2} + \Delta a^{*2} + \Delta b^{*2})^{1/2}$$

Où $\Delta L^*$ représente la différence entre les coordonnées colorimétriques $L^*$ du vitrage avant et après traitement thermique,

$\Delta a^*$ représente la différence entre les coordonnées colorimétriques $a^*$ du vitrage avant et après traitement thermique,

$\Delta b^*$ représente la différence entre les coordonnées colorimétriques $b^*$ du vitrage avant et après traitement thermique,

Plus particulièrement, le vitrage selon l'invention présente une variation colorimétrique en transmission, $\Delta E^*_{tr}$ :

$$\Delta E^*_{tr} = (\Delta L^*_{tr}{}^2 + \Delta a^*_{tr}{}^2 + \Delta b^*_{tr}{}^2)^{1/2}$$

inférieure à 8, préférentiellement inférieure à 5, plus préférentiellement inférieure à 3, lorsque ledit vitrage est soumis à une température d'au moins 630°C et d'au plus 670°C pendant 7 minutes.

Le vitrage selon l'invention présente de manière additionnelle ou non, une variation colorimétrique en réflexion côté face verre, $\Delta E^*_{rg}$ :

$$\Delta E^*_{rg} = (\Delta L^*_{rg}{}^2 + \Delta a^*_{rg}{}^2 + \Delta b^*_{rg}{}^2)^{1/2}$$

inférieure 8, préférentiellement inférieure à 5, plus préférentiellement inférieure à 3, lorsque ledit vitrage est soumis à une température d'au moins 630°C et d'au plus 670°C pendant 7 minutes.

Le vitrage selon l'invention présente de manière additionnelle ou non au deux propriétés précédentes, une variation colorimétrique en réflexion côté face couche, $\Delta E^*_{rc}$, telle que :

$$\Delta E^*_{rc} = (\Delta L^*_{rc}{}^2 + \Delta a^*_{rc}{}^2 + \Delta b^*_{rc}{}^2)^{1/2}$$

inférieure 8, préférentiellement inférieure à 5, plus préférentiellement inférieure à 3, lorsque ledit vitrage est soumis à une température d'au moins 630°C et d'au plus 670°C pendant 7 minutes.

Selon un mode de réalisation particulier, le vitrage selon l'invention est tel que l'épaisseur de la couche métallique absorbant le rayonnement solaire est choisie de façon à ce que la transmission lumineuse pour un substrat constitué de verre clair de 4 mm d'épaisseur soit au moins égale à 2% et au plus égale à 75%. Dans le cas de l'utilisation en tant que toit de véhicule automobile, la transmission lumineuse sera de préférence entre 2 et 10%, de préférence entre 6 et 8%. Dans le cas d'application en bâtiment, la transmission lumineuse sera de préférence entre 10 et 70%, de préférence entre 10% et 60%, avantageusement entre 10 et 50%, et favorablement entre 20 et 40%. En effet, la couche métallique absorbant le rayonnement solaire commande les transmissions lumineuses et énergétiques, de sorte que plus celle-ci est épaisse plus elle absorbe.

Selon un mode particulier de réalisation, le vitrage selon l'invention est tel que l'épaisseur optique des couches diélectriques est choisie de manière à ce que la réflexion côté couches soit d'au moins 1% et d'au plus 40%. Les couches diélectriques, en particulier la couche supérieure commande notamment la réflexion du système. De manière connue l'alternance des couches à indice de réfraction fort et faible, permet de maîtriser la réflexion. L'épaisseur des couches est aussi un facteur déterminant. Dans la limite des épaisseurs indiquées précédemment, l'augmentation de l'épaisseur de la couche en matériau diélectrique située au-dessus de la couche métallique absorbant le rayonnement solaire, réduit l'intensité de la réflexion du côté couche.

En variante, lorsque l'on désire une faible réflexion lumineuse, notamment côté couche, on dispose de préférence deux, voire plus, couches fonctionnelles formées de couches métalliques absorbant le rayonnement solaire avec une couche diélectrique entre ces deux couches, selon la structure suivante, par exemple : couche diélectrique telle que décrite en revendication principale / couche absorbant le rayonnement solaire / couche diélectrique telle que décrite en revendication principale / couche absorbant le rayonnement solaire / couche diélectrique telle que décrite en revendication principale. L'épaisseur totale désirée pour l'absorption du rayonnement solaire est subdivisée en deux, voire en autant de couches absorbantes utilisées. A titre d'exemple illustratif, voici une structure concrète préférée : $Si_3N_4$/NiCrW/$Si_3N_4$/NiCrW/$Si_3N_4$. Cette structure facilite l'obtention d'une très faible réflexion lumineuse côté couche, par exemple 2% seulement.

Selon un mode préféré de réalisation de l'invention, la réflexion lumineuse mesurée du côté substrat est d'au moins 27%, de préférence d'au moins 30%, et avantageusement d'au moins 35%. Cette caractéristique permet d'obtenir un effet esthétique agréable et fort apprécié au niveau du marché commercial dans certaines régions, notamment par l'aspect brillant de la face du vitrage.

Le système de couches du vitrage selon l'invention permet d'obtenir plus aisément cet effet esthétique, notamment en ajustant adéquatement l'épaisseur optique des couches diélectriques afin de gérer correctement l'effet d'interférence optique. Un moyen adéquat consiste à limiter l'épaisseur optique de la première couche diélectrique, disposée entre le substrat et la couche absorbant le rayonnement solaire, à une valeur faible. Cependant, cette solution présente une limite car l'épaisseur de cette première couche diélectrique doit être suffisante pour permettre le traitement thermique à température élevée du système de couche sans détérioration de ses propriétés, notamment à cause de la migration d'éléments provenant du substrat. Un autre moyen préféré consiste à ce que la seconde couche diélectrique, disposée au-dessus de la couche absorbant le rayonnement solaire, ait une épaisseur optique élevée et comprise dans une gamme spécifique. De préférence, la seconde couche diélectrique, disposée au-dessus de la couche absorbant le rayonnement solaire, a une épaisseur optique (épaisseur géométrique multipliée par l'indice de réfraction du matériaux) comprise entre 70 et 170 nm, de préférence entre 80 et 140 nm, et avantageusement entre 110 et 130 nm.

De préférence, la réflexion lumineuse mesurée du côté substrat est au moins 2 fois, avantageusement au moins 2,5 fois, et préférentiellement au moins 3 fois supérieure à la réflexion lumineuse mesurée du côté du système de couches. De préférence, la réflexion lumineuse mesurée du côté substrat est d'au moins 15%, avantageusement d'au moins 20%, supérieure à la réflexion lumineuse mesurée du côté du système de couches. Etant donné que pour obtenir le meilleur effet de contrôle solaire, la couche est disposée en position 2 (en partant de l'extérieur), cette caractéristique permet d'obtenir une réflexion extérieure (mesurée du côté du substrat) permettant la réalisation de l'effet esthétique agréable recherché tout en évitant l'effet miroir lorsqu'on regarde au travers du vitrage à partir de l'intérieur de l'espace fermé par le vitrage, améliorant ainsi la transmission lumineuse et la visibilité au travers du vitrage. Cette combinaison d'une réflexion extérieure élevée, pour obtenir un effet esthétique recherché, avec une réflexion intérieure faible est une caractéristique essentielle de ce mode de réalisation de l'invention. L'effet miroir vu de l'intérieur empêchant une vision correcte au travers du vitrage à partir de l'enceinte fermée par le vitrage est ainsi évité. Une épaisseur élevée de la seconde couche diélectrique est une condition primordiale.

Selon un mode de réalisation avantageux pour obtenir cette différence de réflexion lumineuse entre le côté substrat et le côté du système de couches, la couche en matériau diélectrique disposée au-dessus de la couche absorbant le rayonnement solaire est multicouches et comprend un matériau ayant un indice de réfraction élevé, supérieure à 2. Dans le cadre de la présente invention, ce diélectrique à haut indice de réfraction est un matériau qui supporte le traitement thermique sans modification structurelle significative. Un exemple spécifique d'un tel matériau est de l'oxyde de titane dopé, par exemple avec du zirconium ou du niobium, notamment un mélange d'oxyde de titane et d'oxyde de zirconium à raison de 40 à 60% chacun. Un autre exemple d'un tel matériau est l'oxyde de zirconium. De préférence,

**EP 2 956 421 B1**

ce matériau à haut indice est disposé entre la couche absorbant le rayonnement solaire et la couche diélectrique la plus extérieure du système de couches.

De préférence, le système de couches se termine par une fine couche de protection à base d'un oxyde mixte titane-zirconium.

Les vitrages selon l'invention trouvent des applications diverses en adaptant leurs propriétés par un ajustement des couches et notamment de leurs épaisseurs.

Les vitrages selon l'invention peuvent faire partie de vitrages doubles et dans ce cas le système de couches peut être disposé dans l'espace entre les deux feuilles de verre, ce qui limite les risques d'altération notamment mécanique. Néanmoins une des caractéristiques significative des systèmes de couches proposés pour les vitrages selon l'invention est leur résistance tant mécanique que chimique. Dans les modes de réalisation sans couche métallique supplémentaire à base d'argent ou avec couche métallique supplémentaire à base d'argent mais sans oxyde dans le système de couches, cette résistance est telle qu'ils peuvent être utilisés avec le système de couches exposé sans autre protection. Dans ce dernier cas le vitrage peut aussi bien se composer d'une seule feuille de verre, les systèmes de couches étant appliqués sur une face de cette feuille. Il peut aussi s'agir d'un vitrage feuilleté comprenant deux feuilles de verre, ou plus, les feuilles étant réunies au moyen de feuilles intercalaires de matériau thermoplastique suivant les techniques traditionnelles dans ce domaine.

Dans ces applications sur un vitrage unique le système de couches n'est pas protégé de l'environnement. Même dans le cas de vitrage feuilleté, les couches peuvent être sur une face externe pour qu'elles puissent jouer leur rôle dans le contrôle de transmission énergétique en agissant sur l'émissivité de la surface.

Lorsque la fonctionnalité privilégiée est le caractère bas-émissif du vitrage, le système de couches est de préférence disposé sur la face tournée vers l'intérieur du véhicule ou du bâtiment. Cette position conduit à la réflexion la plus importante des rayons infrarouges de grandes longueur d'onde pour conserver la chaleur à l'intérieur de l'habitacle ou du bâtiment. Pour les véhicules cette position correspond à la couche sur la face tournée vers l'habitacle. Dans cette position le système de couches résiste d'autant mieux que les sollicitations, notamment pour les vitrages fixes (toit, lunette...) sont relativement limitées.

Le vitrage selon l'invention trouve donc son application comme élément vitré de véhicule automobile : toit, pare-brise, fenêtre latérale, lunette arrière (le système de couches étant de préférence sur la face exposée vers l'habitacle) et élément de vitrage de bâtiments.

Plus particulièrement, le vitrage selon l'invention trouve son application comme toit ouvrant pour véhicule automobile.

En effet les constructeurs automobiles sont à la recherche d'une solution qui évite le placement d'un rideau (voile) en toiture pour la protection contre le soleil. L'absence de ce rideau conduit à un gain de poids (~ 6 kg) et donc à une moindre consommation de combustible, d'où moins de $CO_2$ rejeté. Sans aucun rideau, le confort thermique doit être malgré tout garanti pour les passagers, c'est-à-dire pas de surchauffe en été et pas de sensation de paroi froide en hiver. Dans un véhicule électrique, il n'y a pas de chaleur provenant du moteur thermique pouvant être utilisée pour réchauffer l'habitacle du véhicule et la chaleur du corps doit être absolument maintenue à l'intérieur (pas de perte par le toit).

Le vitrage selon l'invention trouve aussi son application comme élément vitré d'appareil électroménager tel qu'une porte de four, où il peut aussi apporter un effet esthétique recherché. Il résiste bien aux différentes agressions chimiques et/ou mécaniques dues à ce type particulier d'application.

Comme déjà indiqué ci-dessus à plusieurs reprises, le vitrage selon l'invention trouve bien sûr également son application comme élément vitré d'un bâtiment. Dans ce cas d'application, le vitrage peut former un vitrage double ou triple avec le système de couches disposé face à l'espace clos à l'intérieur du vitrage multiple. Le vitrage peut aussi former un vitrage feuilleté dont le système de couches peut être en contact avec la matière adhésive thermoplastique reliant les substrats, en général, du PVB. Le vitrage selon l'invention est toutefois particulièrement utile lorsque le système de couches est face à l'environnement externe, que ce soit un simple vitrage ou un vitrage feuilleté, mais aussi éventuellement un vitrage multiple.

Bien entendu, le substrat verrier peut être un verre teinté dans la masse, tel qu'un verre gris, bleu ou vert, pour absorber en plus le rayonnement solaire, ou pour former un espace privé à faible transmission lumineuse afin de dissimuler l'habitacle du véhicule, ou un bureau dans un bâtiment, aux regards externes.

En variante des différents modes de réalisation incluant une couche métallique supplémentaire à base d'argent, l'invention inclut également l'introduction non seulement d'une seule couche métallique à base d'argent mais également de deux, ou même trois, voire quatre, couches métalliques à base d'argent. Dans ce cas, la ou les couches métalliques absorbant le rayonnement solaire peuvent être disposées à proximité immédiate (de part et d'autre ou d'un côté ou de l'autre) de plusieurs, ou de chaque, couche à base d'argent. De préférence, les couches métalliques absorbant le rayonnement solaire seront disposées de part et d'autre de la première couche métallique à base d'argent en partant du substrat. Des couches diélectriques à base de nitrure ou oxynitrure de silicium et/ou d'aluminium sont de préférence disposées entre chaque couche métallique à base d'argent selon une répétition des exemples à une seule couche

10

fonctionnelle.

## 5. Description de modes préférés de réalisation de l'invention

Des exemples de vitrages selon l'invention mais également des exemples comparatifs (« R ») sont donnés dans le tableau I ci-après. Les propriétés optiques sont définies, en verre simple, pour des vitrages dont le substrat est en verre "float" ordinaire clair de 4 mm d'épaisseur. Les couches sont dans l'ordre, de gauche à droite, en partant du verre. Les épaisseurs approximatives sont exprimées en nm.

Tableau I et Ibis : Exemples de vitrages selon l'invention et comparatifs des performances de vitrages selon l'invention avec des vitrages de l'art antérieur, les revêtements étant déposés sur du verre clair ayant une épaisseur de 4 mm. Les transmissions lumineuses (TL) et les réflexions lumineuses côté couche (Rc) et côté verre (Rg) sont aussi indiquées (en %) pour certains exemples.

**Tableau I :**

| Ex. | Revêtement | TL | Rc | Rg | $\Delta E^*_{T1}$ | $\Delta E^*_{Rc}$ | $\Delta E^*_{Rg}$ |
|---|---|---|---|---|---|---|---|
| 1R | SiN (40nm)/NiCr (1nm)/Ag (18nm)/NiCr (1nm)/SiN (56nm) | | | | 3,9 | 5,1 | 1,7 |
| 2R | SiN (20nm)/NiCr (8,5nm)/SiN (35nm) | 39 | 11 | 17 | 1,70 | 4,33 | 3,84 |
| 3R | SiN (20nm)/NiCr (13,7nm)/SiN (35nm) | 27 | 15 | 25 | 2,61 | 6,92 | 2,32 |
| 4R | SiN (20nm)/NiCr (22nm)/SiN (35nm) | 14 | 22 | 36 | 3,56 | 3,55 | 1,74 |
| 5R | SiN (87nm)/NiCr (13,7nm)/SiN (30nm) | 28 | 22 | 17 | 1,95 | 6,59 | 4,60 |
| 1 | SiN (40nm)/NiCrW (1nm)/Ag (18nm)/NiCrW (1nm)/SiN (56nm) | | | | 2,1 | 2,7 | 0,5 |
| 2 | SiN (20nm)/NiCrW (8,5nm)/SiN (35nm) | 30 | 18 | 24 | 0,90 | 3,44 | 0,30 |
| 3 | SiN (20nm)/NiCrW (13,7nm)/SiN (35nm) | 19 | 25 | 33 | 1,02 | 1,68 | 0,84 |
| 4 | SiN (20nm)/NiCrW (22nm)/SiN (35nm) | 10 | 31 | 41 | 1,13 | 2,50 | 0,20 |
| 5 | SiN (87nm)/NiCrW (13,7nm)/SiN (30nm) | 20 | 30 | 24 | 0,41 | 2,94 | 1,47 |
| 6 | SiN (53nm)/NiCrW (16,5nm)/$SiO_x$ (85,2nm) | 21 | 28 | 22 | -2,5 | 2,9 | 2 |
| 7 | SiN (65nm)/NiCrW (25nm)/$SiO_x$ (80,4nm) | 10 | 33 | 30 | 2,3 | 2,1 | 1,3 |
| 8 | SiN (10nm)/NiCrW (7,5nm)/$SiO_x$ (73nm) | 37 | 9 | 22 | 0,8 | 2,4 | 0,4 |
| 9 | SiN (10nm)/NiCrW (21nm)/$SiO_x$ (73nm) | 11 | 30 | 42 | 1 | 1,6 | 0,4 |
| 10 | SiN (10nm)/NiCrW (13nm)/$SiO_x$ (90nm) | 21 | 18 | 33 | 1,3 | 2,6 | 0,4 |
| 11 | $SiO_x$ (20nm)/NiCrW (11,7nm)/SiN (29nm) | | | | - | - | - |
| 12 | $SiO_x$ (20nm)/NiCrW (6,9nm)/SiN (29nm) | | | | - | - | - |
| 13 | $SiO_x$ (20nm)/NiCrW (20nm)/SiN (29nm) | | | | - | - | - |
| 14 | SiN (35,5nm)/NiCrW (0,5nm)/Ag (17,4nm)/NiCrW (0,5nm)/SiN (53,5nm) | | | | - | - | - |
| 15 | SiN (36,1nm)/NiCrW (0,5nm)/Ag (17,4nm)/NiCrW (0,5nm)/SiN (53,5nm) | | | | - | - | - |
| 16 | SiN (79,7nm)/NiCrW (2,8nm)/Ag (17,9nm)/NiCrW (0,7nm)/SiN (45,1nm) | | | | - | - | - |
| 17 | SiN (37,3nm)/NiCrW (1,4nm)/Ag (21,3nm)/NiCrW (1,4nm)/SiN (38,7nm) | | | | - | - | - |
| 18 | SiN (59,4nm)/NiCrW (3,4nm)/Ag (19,5nm)/NiCrW (3,4nm)/SiN (49,3nm) | | | | - | - | - |
| 19 | SiN (13,5nm)/NiCrW (10,6nm)/SiN (60nm)/NiCrW(7,3nm)/SiN (60nm) | | | | 1,6 | 3,4 | 1,6 |

**Tableau Ibis:**

| Ex. | Revêtement (épaisseur en nm) | | | | | TL | Rc | Rg | $\Delta E^*_{T1}$ | $\Delta E^*_{Rc}$ | $\Delta E^*_{Rg}$ |
|---|---|---|---|---|---|---|---|---|---|---|---|
| | SiN | NiCrW | SiN | NiCrW | SiN | | | | | | |
| 34 | 28,5 | 7,8 | 27,4 | 0,0 | 0,0 | 33,3 | 24,1 | 17,4 | 0,8 | 1,1 | 1,2 |

(suite)

| Ex. | Revêtement (épaisseur en nm) | | | | | TL | Rc | Rg | $\Delta E^*_{T1}$ | $\Delta E^*_{Rc}$ | $\Delta E^*_{Rg}$ |
|---|---|---|---|---|---|---|---|---|---|---|---|
| | SiN | NiCrW | SiN | NiCrW | SiN | | | | | | |
| 35 | 22,9 | 7,9 | 23,9 | 0,0 | 0,0 | 31,1 | 25,4 | 17,6 | 0,7 | 0,9 | 1,1 |
| 36 | 10,0 | 4,3 | 34,0 | 2,0 | 26,5 | 38,4 | 9,0 | 25,0 | 0,7 | 1,7 | 1,3 |
| 37 | 26,0 | 11,0 | 46,0 | 0,0 | 0,0 | 32,6 | 7,4 | 31,0 | 0,5 | 7,3 | 0,6 |
| 38 | 54,1 | 4,4 | 64,5 | 7,0 | 44,8 | 22,5 | 5,2 | 6,6 | 1,1 | 2,5 | 2,6 |
| 39 | 22,9 | 7,9 | 23,9 | 0,0 | 0,0 | 31,1 | 25,4 | 17,6 | 0,7 | 0,9 | 1,1 |
| 40 | 72,1 | 4,0 | 50,9 | 6,5 | 20,0 | 20,9 | 16,2 | 8,3 | 1,1 | 0,6 | 0,6 |
| 41 | 54,5 | 2,9 | 89,4 | 9,6 | 34,2 | 21,2 | 19,8 | 12,0 | 1,2 | 2,0 | 2,3 |
| 42 | 95,0 | 5,7 | 70,7 | 4,5 | 19,0 | 20,9 | 21,9 | 13,5 | 0,7 | 2,3 | 2,2 |
| 43 | 100,0 | 1,8 | 28,7 | 5,1 | 51,0 | 38,6 | 3,4 | 26,5 | 0,7 | 0,9 | 3,9 |
| 44 | 100,0 | 1,8 | 28,7 | 5,1 | 47,0 | 38,5 | 3,6 | 25,5 | 0,7 | 1,0 | 3,7 |
| 45 | 129,1 | 5,2 | 52,0 | 0,0 | 0,0 | 45,8 | 4,9 | 30,0 | 0,9 | 1,2 | 3,8 |
| 46 | 140,0 | 6,8 | 39,0 | 0,0 | 0,0 | 37,4 | 10,3 | 26,3 | 1,0 | 2,6 | 3,6 |
| 47 | 138,0 | 6,8 | 39,0 | 0,0 | 0,0 | 37,4 | 10,1 | 26,0 | 1,0 | 2,2 | 3,6 |
| 48 | 39,0 | 1,0 | 79,3 | 6,0 | 118,7 | 29,0 | 28,0 | 13,9 | 1,4 | 2,6 | 1,8 |
| 49 | 17,7 | 4,4 | 60,0 | 4,9 | 25,0 | 24,6 | 14,1 | 9,8 | 0,6 | 0,1 | 0,6 |
| 50 | 78,3 | 3,0 | 69,4 | 5,8 | 62,6 | 30,9 | 4,7 | 10,8 | 1,8 | 7,8 | 4,6 |
| 51 | 15,0 | 6,1 | 55,0 | 5,5 | 33,7 | 19,2 | 8,8 | 13,2 | 0,6 | 0,4 | 0,3 |
| 52 | 15,0 | 6,1 | 57,5 | 5,5 | 33,7 | 19,0 | 9,0 | 12,6 | 0,7 | 0,5 | 0,3 |
| 53 | 14,6 | 4,7 | 62,1 | 3,1 | 95,0 | 27,6 | 16,7 | 12,1 | 0,4 | 1,2 | 2,5 |
| 54 | 14,6 | 4,7 | 62,1 | 3,1 | 92,5 | 28,2 | 15,9 | 11,8 | 0,4 | 1,3 | 2,4 |
| 55 | 9,5 | 5,7 | 61,3 | 3,3 | 100,0 | 23,9 | 15,4 | 15,7 | 0,4 | 2,2 | 2,3 |
| 56 | 90,0 | 12,0 | 12,0 | 0,0 | 0,0 | 19,0 | 42,3 | 17,4 | 1,3 | 0,8 | 3,8 |
| 57 | 24,2 | 19,9 | 25,0 | 0,0 | 0,0 | 47,0 | 39,8 | 37,3 | 3,6 | 4,2 | 3,4 |

Les couches métalliques absorbant le rayonnement solaire, les couches métalliques supplémentaires à base d'argent et les couches diélectriques sont appliquées par une technique de pulvérisation cathodique ("sputtering") dans des conditions usuelles pour ce type de technique. En variante, les couches diélectriques sont appliquées par la technique bien connue appelée PECVD (« Plasma-Enhanced Chemical Vapor Deposition ») ou dépôt chimique en phase vapeur assisté par plasma.

Les couches diélectriques de nitrure de silicium sont produites à partir de cibles métalliques dans une atmosphère constituée d'un mélange d'argon (30-70%) et d'azote (70-30%) sous une pression totale de 4mTorr (0,53Pa). Les couches de nickel-chrome (Nickel/Chrome 80/20)-tungstène (50% en poids de NiCr et 50% de W dans l'alliage NiCrW) sont déposées à partir de cathodes métalliques en atmosphère d'argon seul. En variante, l'atmosphère de dépôt de cet alliage métallique NiCrW comprend un peu d'azote ou d'oxygène provenant des zones de dépôt voisines. Il en résulte que la couche NiCrW formée, tout en conservant son caractère essentiellement métallique, contient un peu d'azote ou d'oxygène. Les propriétés obtenues sont similaires. Les couches diélectriques d'oxyde de silicium sont produites au départ d'une cible à base de silicium dans une atmosphère contenant de l'argon et de l'oxygène.

Sur les échantillons on mesure la transmission lumineuse TL et la réflexion lumineuse du côté couche ou substrat avec l'Illuminant D65, 2°. Les coordonnées colorimétriques L*, a*, b*, CIE, sont également mesurées avant et après traitement thermique ave l'Illuminant D65, 10°. L'angle sous lequel les mesures sont faites est de 8°.

Les échantillons sont soumis à un traitement thermique comprenant le maintien à 670°C pendant 7 min et 30 sec. Les variations de transmission et de réflexion en $\Delta E^*$ sont également données dans les tableaux. Dans les exemples, les notations SiN désignent les nitrures de silicium sans représenter une formule chimique, étant entendu que les produits obtenus ne sont pas nécessairement rigoureusement stœchiométriques, mais sont ceux obtenus dans les conditions de dépôt indiquées et qui sont voisins des produits stœchiométriques. Les notations $SiO_x$ désignent les oxydes de silicium sans représenter une formule chimique, étant entendu que les produits obtenus ne sont pas nécessairement rigoureusement stœchiométriques, mais sont ceux obtenus dans les conditions de dépôt indiquées et qui sont voisins des produits stœchiométriques. Les couches en SiN ou en SiOx peuvent contenir jusqu'à environ maximum 10% poids d'aluminium provenant de la cible. La couche diélectrique selon l'invention peut en outre être constituée de plusieurs couches individuelles comprenant ou consistant essentiellement en ces mêmes matériaux.

Les résistances mécanique et chimique des vitrages selon l'invention sans couche d'argent sont caractérisées par le passage avec succès des tests définis dans la norme EN1096-2 pour les revêtements dits de classe B. En outre, les vitrages selon l'invention satisfont également aux exigences des tests suivants :

- au brouillard salin (NSS: *Neutral Salt Spray*) selon la norme ISO 9227-2006, de préférence pendant au moins 10 jours;

- à la chambre climatique selon la norme EN1036-2008, de préférence pendant au moins 10 jours; et

- au test Cleveland selon la norme ISO 6270-1:1998, de préférence pendant au moins 10 jours;

- au test de résistance acide ($SO_2$) selon la norme EN 1096-2.

- Au test AWRT (*Automatic web rub test*) décrit ci-après : Un piston recouvert d'un tissu en coton est mis en contact avec la couche à évaluer et oscille sur sa surface. Le piston porte un poids de manière à appliquer une force de 33N sur un doigt de 17 mm de diamètre. L'abrasion du coton sur la surface revêtue va endommager (enlever) la couche après un certain nombre de cycles. Le test est utilisé pour définir la limite avant que la couche ne se décolore (enlèvement partiel de la couche) et que des griffes n'apparaissent dans la couche. Le test est réalisé pour 10, 50, 100, 250, 500 et 1000 cycles, à divers endroits séparés sur l'échantillon. L'échantillon est observé sous un ciel artificiel pour déterminer si une décoloration ou des griffes peuvent être vues sur l'échantillon. Le résultat AWRT indique le nombre de cycles ne donnant pas ou très peu de dégradation (non visible à l'œil nu sous un ciel artificiel uniforme à 80 cm de distance de l'échantillon).

- au test DBT (Dry Brush test) selon la norme ASTM D2486-00 (méthode de test "A"), de préférence pendant au moins 1000 cycles

et ce avant et après éventuel traitement thermique.

**Tableau II** : Les exemples suivants ont été réalisés avec d'autres proportions de NiCr et de W dans l'alliage métallique absorbant le rayonnement solaire. De même que pour les exemples précédents, les numéros d'exemples portant la lettre (« R ») sont des exemples comparatifs, les numéros sans cette lettre sont des exemples selon l'invention. Les résultats (OK pour bon ; KO pour inacceptable ; et S pour satisfaisant) de trois tests de résistance chimique sont aussi indiqués : chambre climatique (CC), test Cleveland (Clev) et brouillard salin (BS).

La même structure suivante a été utilisée : 25 nm SiN/couche fonctionnelle/55 nm SiN (SiN signifie $Si_3N_4$, éventuellement dopé à l'aluminium pour rendre conductrice la cible de silicium de départ). Les différentes couches sont déposées de la même manière que dans les exemples précédents. La constitution de la couche fonctionnelle est donnée dans le tableau II ci-dessous. Les pourcentages NiCr par rapport à W sont donnés en poids. La transmission lumineuse de ces exemples est d'environ 7% et le facteur solaire d'environ 20%.

| Ex. | Couche fonctionnelle | $\Delta E^*_{T1}$ | $\Delta E^*_{Rc}$ | $\Delta E^*_{Rg}$ | CC | Clev | BS |
|-----|---------------------|-------|-------|-------|-----|------|-----|
| 6R | 41 nm W pur | 1,2 | 4,8 | 1,1 | KO | S | S |
| 7R | 35 nm NiCr pur | 3,9 | 33,8 | 7,2 | OK | OK | OK |
| 20 | 28 nm NiCrW (63/37%) | 1,4 | 5,6 | 0,4 | OK | OK | OK |
| 21 | 28,4 nm NiCrW (43/57%) | 1,0 | 5,8 | 0,4 | OK | OK | OK |
| 22 | 30,3 nm NiCrW (33/67%) | 1,4 | 4,8 | 0,6 | OK | OK | S |
| 23 | 34 nm NiCrW (22/78%) | 1,4 | 4,4 | 0,8 | S | S | S |
| 24 | 36,1 nm NiCrW (12/88%) | 2 | 3,8 | 1,2 | S | S | S |

**Tableau III** : l'exemple de système de couches, déposé sur un substrat verrier, repris au tableau III ci-dessous présente une structure à deux couches fonctionnelles formées chacune d'une couche métallique absorbant le rayonnement solaire formant un vitrage selon l'invention. Les conventions d'écriture sont les mêmes que pour le tableau II.

| Ex. | Revêtement | $\Delta E^*_{T1}$ | $\Delta E^*_{Rc}$ | $\Delta E^*_{Rg}$ | CC | Clev | BS |
|---|---|---|---|---|---|---|---|
| 25 | 15 nm SiN / 10,6 nm NiCrW (63/37%) / 60 nm SiN / 7,3 nm NiCrW (43/57%) / 60 nm SiN | 1,6 | 3,4 | 1,6 | OK | OK | OK |

La variation des épaisseurs des couches diélectriques, dans des limites raisonnables, n'affecte pas significativement la modification de teinte lors du traitement thermique, ni la durabilité, mais bien entendu elle modifie l'aspect esthétique (et en particulier la teinte) de départ.

**Tableau IV** : les exemples 26-33 de système de couches, déposé sur un substrat verrier, repris au tableau IV ci-dessous se rapportent plus particulièrement au mode de réalisation de l'invention selon lequel la réflexion lumineuse côté substrat est élevée, et en particulier plus élevée que la réflexion lumineuse côté du système de couches. La couche métallique absorbant le rayonnement solaire est un alliage comprenant 50% de nickel-chrome (80-20%) et 50% de tungstène. Les conventions d'écriture sont les mêmes que pour le tableau I. Les chiffres entre parenthèses sont les épaisseurs physiques en nm des différentes couches. Les propriétés (en % pour la transmission et la réflexion lumineuses) sont données en vitrage monolithique après traitement thermique. L'appellation «TZO» représente un oxyde mixte comprenant 50% de $TiO_2$ et 50% de $ZrO_2$.

| Ex. | Revêtement | TL | Rc | Rg | $\Delta E^*_{T1}$ | $\Delta E^*_{Rc}$ | $\Delta E^*_{Rg}$ |
|---|---|---|---|---|---|---|---|
| 26 | SiN (15)/NiCrW (9,8)/SiN (50,6) | 32,5 | 6 | 34,6 | 0,6 | 6 | 1 |
| 27 | SiN (15)/NiCrW (15,4)/SiN (48,2) | 21,6 | 11,5 | 40,1 | 0,9 | 5,3 | 0,7 |
| 28 | SiN (15)/NiCrW (24,5)/SiN (48) | 10,5 | 17,5 | 45 | 2,1 | 3,7 | 1,5 |
| 29 | SiN (78,4)/NiCrW (18)/SiN (49,5) | 20,4 | 14,9 | 30,9 | 1,2 | 4,9 | 0,7 |
| 30 | SiN (15)/NiCrW (10,1)/TZO (29,7)/SiN (20) | 32,4 | 6,1 | 39,2 | 1,2 | 3,1 | 0,9 |
| 31 | SiN (15)/NiCrW (16,2)/TZO (27,2)/SiN (20) | 21,1 | 9,2 | 45,1 | 0,9 | 2,6 | 0,9 |
| 32 | SiN (15)/NiCrW (25)/TZO (13,2)/SiN (34,7) | 10,8 | 14,9 | 47,7 | 0,4 | 2,8 | 0,6 |
| 33 | SiN (75,4)/NiCrW (18,9)/TZO (23,7)/SiN (23,6) | 21,3 | 11,9 | 33,5 | 1,4 | 1,4 | 0,3 |

Le tableau Va ci-après donne des exemples avec deux couches métalliques supplémentaires à base d'argent, la couche absorbant le rayonnement solaire se trouvant dans le premier revêtement diélectrique disposé entre le substrat et la première couche à base d'argent. Les différentes couches sont déposées dans les mêmes conditions que pour les exemples du tableau I. Les propriétés sont mesurées de la même manière et sont données dans le tableau Vb. Les exemples du tableau Va ont aussi subi un traitement thermique identique à celui décrit pour les exemples du tableau I et les variations des propriétés sont, de la même manière, données en $\Delta E^*$, soit en transmission $\Delta E^*_{T1}$ (ou $\Delta E^*_{tr}$), soit en réflexion côté couche ($\Delta E^*_{Rc}$), soit en réflexion côté substrat verrier ($\Delta E^*_{Rg}$). De plus, les coordonnées L*, a*, b*, et Y (qui représente soit la transmission lumineuse totale, soit la réflexion lumineuse totale) sont aussi indiquées en transmission (TL), en réflexion côté substrat verrier (Rg) et en réflexion côté systèmes de couches (Rc), ainsi que la variation de la transmission lumineuse totale ($\Delta_{TL}$), et la variation de la réflexion totale côté substrat verrier ($\Delta_{Rg}$) et côté système de couches ($\Delta_{Rc}$). L'appellation ZSO5 représente un oxyde mixte zinc-étain formé à partir d'une cathode d'un alliage zinc-étain à 52% en poids de zinc et 48% en poids d'étain pour former la structure spinelle de stannate de zinc

$Zn_2SnO_4$. L'expression «AZO» se rapporte à un oxyde de zinc dopé avec de l'aluminium, obtenu par pulvérisation cathodique, à partir d'une cathode céramique formée par l'oxyde à déposer, en atmosphère neutre ou légèrement oxydante. En variante, AZO peut être remplacé par d'autres barrières bien connues dans le domaine et adaptées aux propriétés désirées pour le système de couche formé, comme par exemple un oxyde de Ti, dopé ou non avec du niobium ou du zirconium, obtenu de préférence à partir d'une cible céramique formée de l'oxyde à déposer, ou ZnO pur. B représente une couche barrière contre l'oxydation de l'argent bien connue dans le domaine. D représente une ou plusieurs couches diélectriques, notamment à base de stannate de zinc, de ZnO dopé ou non, ou d'un autre matériau connu dans le domaine et adapté à ce type d'empilage de couche, par exemple un nitrure tel qu'AlN. M représente la couche de mouillage à base de ZnO, dopé à l'aluminium ou non. IR représente les couches fonctionnelles réfléchissant le rayonnement infrarouge. ABS représente la couche absorbant le rayonnement solaire.

Les exemples donnés dans le tableaux VIa sont, de la même manière, des exemples avec deux couches métalliques supplémentaires à base d'argent comme pour le tableau Va, mais cette fois la couche absorbant le rayonnement solaire se trouve dans le second revêtement diélectrique disposé entre la première couche à base d'argent et la seconde couche à base d'argent. Les propriétés obtenues sont données dans le tableau VIb de la même manière que pour le tableau Vb. L'appellation $TZO_{65}$ signifie un oxyde mixte titane-zirconium avec 35% de zirconium et 65% de titane, différent de TZO (50/50).

Le tableau VIIa ci-après donne des exemples avec trois couches métalliques supplémentaires à base d'argent, la couche absorbant le rayonnement solaire se trouvant dans le premier revêtement diélectrique disposé entre le substrat et la première couche à base d'argent. Les propriétés correspondantes sont données dans le tableau VIIb, en verre simple, pour un substrat en verre clair de 6 mm d'épaisseur non traité thermiquement. La valeur du facteur solaire (g) est aussi indiquée.

Le tableau VIIIa ci-après donne aussi des exemples avec trois couches métalliques supplémentaires à base d'argent, mais cette fois la couche absorbant le rayonnement solaire se trouve dans le second revêtement diélectrique disposé entre la première couche à base d'argent et la seconde couche à base d'argent. Les propriétés correspondantes sont données dans le tableau VIIIb, en verre simple, pour un substrat en verre clair de 6 mm d'épaisseur non traité thermiquement. La valeur du facteur solaire (g) est aussi indiquée.

Bien entendu, l'invention n'est pas limitée aux exemples de réalisation mentionnés.

**Tableau Va :**

| Ex. | D1a | ABS | D1b | | M | IR1 | B | D2 | | | M | IR2 | B | D3 | | |
|---|---|---|---|---|---|---|---|---|---|---|---|---|---|---|---|---|
| | SiN | NiCrW | SiN | ZSO5 | ZnO | Ag | AZO | ZSO5 | SiN | ZSO5 | ZnO | Ag | AZO | ZSO5 | SiN | TZO |
| 58 | 10 | 1,1 | 10 | 8 | 5 | 10,5 | 5 | 15,35 | 35 | 15,35 | 5 | 14,7 | 5 | 11,7 | 20 | 3 |
| 59 | 10 | 1,8 | 10 | 10,4 | 5 | 11,4 | 5 | 14,2 | 35 | 14,2 | 5 | 14,9 | 5 | 11,6 | 20 | 3 |
| 60 | 10 | 2,7 | 10 | 12,8 | 5 | 12,6 | 5 | 14,05 | 35 | 14,05 | 5 | 14,8 | 5 | 11,9 | 20 | 3 |

**Tableau Vb :**

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 58 | -1,2 | 0,4 | 0,6 | 2,3 | 3,1 | 6,2 | 68,9 | 86,4 | -3,3 | 2,6 | 6,8 | 31,7 | 0,5 | -11,8 | 4,3 | 24,8 | -3,5 | -5,6 |
| 59 | 1,2 | 0,4 | -0,1 | 1,3 | 1,5 | 1,3 | 61,2 | 82,5 | -4,4 | 2,9 | 5,8 | 29,1 | 0 | -9,3 | 4,4 | 25 | 3 | -2,1 |
| 60 | 2,2 | 0,6 | -0,5 | 1,3 | 5,3 | 2,1 | 50,5 | 76,5 | -4,4 | -1,1 | 6,4 | 30,6 | 0,6 | -7,6 | 7,9 | 33,7 | -0,4 | 6,3 |

**Tableau Via :**

| Ex. | D1 | M | IR1 | B | D2a | | ABS | D2b | | | M | IR2 | B | D3 | | P |
|---|---|---|---|---|---|---|---|---|---|---|---|---|---|---|---|---|
| | ZSO5 | ZnO | Ag | AZO | ZSO5 | SiN | NiCrW | SiN | ZSO5 | | ZnO | Ag | AZO | ZSO5 | SiN | TZO |
| 61 | 36,6 | 5 | 10 | 5 | 29,7 | 10 | 0,8 | 35 | 6,1 | | 5 | 15,2 | 5 | 10,1 | 20 | 3 |
| 62 | 38,9 | 5 | 13,4 | 5 | 5,5 | 35 | 1,1 | 10 | 33 | | 5 | 14,9 | 5 | 9,5 | 20 | 3 |
| 63 | 38,9 | 5 | 15,5 | 5 | 9,6 | 20 | 1,7 | 25 | 29,6 | | 5 | 15,6 | 5 | 9,5 | 20 | 3 |
| | ZSO5 | ZnO | Ag | AZO | ZSO5 | SiN | NiCrW | SiN | $TZO_{65}$ | | ZnO | Ag | AZO | ZSO5 | SiN | TZO |
| 64 | 38 | 4,0 | 14,1 | 5,5 | 24,1 | 20 | 1,1 | 25 | 10 | | 4 | 15,5 | 5,5 | 9,9 | 21 | 3 |
| | ZSO5 | ZnO | Ag | AZO | ZSO5 | SiN | NiCrW | SiN | ZSO5 | $TZO_{65}$ | ZnO | Ag | AZO | ZSO5 | SiN | TZO |
| 65 | 42 | 4 | 14,1 | 5,5 | 24,8 | 20 | 1,1 | 25 | 9,2 | 3 | 4 | 15,5 | 5,5 | 8,3 | 21 | 3 |

**Tableau VIb :**

| Ex. | $\Delta_{TL}$ | $\Delta_{Rc}$ | $\Delta_{Rg}$ | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|---|---|
| | | | | | | | Y | L* | a* | b* | Y | L* | a* | b* | Y | L* | a* | b* |
| 61 | 2,1 | 2,1 | 0,7 | 1,1 | 5,3 | 2,5 | 66,9 | 85,4 | -4,5 | 4,0 | 5,9 | 29,4 | -0,3 | -8,5 | 6,0 | 29,4 | 6,7 | -4,6 |
| 62 | 1,9 | 1,6 | 0,1 | 1,5 | 4,9 | 1,7 | 57,2 | 80,3 | -5,0 | 3,4 | 11,4 | 40,2 | -1,1 | -4,9 | 5,2 | 27,8 | 2,0 | -17,5 |
| 63 | 1,7 | 2,0 | -0,7 | 2,8 | 6,7 | 2,8 | 43,3 | 71,8 | -6,8 | 2,9 | 18,0 | 49,6 | 0,9 | -4,6 | 5,4 | 28,6 | 11,4 | -24,3 |
| 64 | -0,7 | 2,0 | -0,1 | 2,0 | 5,2 | 2,2 | 57,3 | 80,4 | -4,7 | 2,2 | 12,1 | 41,3 | -0,5 | -0,4 | 4,9 | 26,9 | -0,4 | -15,9 |
| 65 | 2,8 | 1,6 | -0,8 | 1,6 | 4,7 | 2,0 | 57,0 | 80,2 | -4,6 | 3,3 | 11,4 | 40,3 | -2,6 | -4,3 | 5,3 | 27,9 | 0,3 | -13,8 |

Tableau VIIa

| Ex. | D1a | ABS | D1b | | M | IR1 | B | D2 | | | M | IR2 | B | D3 | | | M | IR3 | B | D4 | |
|---|---|---|---|---|---|---|---|---|---|---|---|---|---|---|---|---|---|---|---|---|---|
| | SiN | NiCrW | SiN | ZSO5 | ZnO | Ag | AZO | ZSO5 | SiN | ZSO5 | ZnO | Ag | AZO | ZSO5 | SiN | ZSO5 | ZnO | Ag | AZO | ZSO5 | SiN |
| 66 | 16,2 | 1,8 | 13,4 | 1,1 | 5 | 11,5 | 4 | 20 | 20 | 21,1 | 5 | 15,2 | 4 | 15 | 17 | 29,1 | 5 | 16,2 | 4 | 14 | 18 |
| 67 | 16,2 | 1,8 | 13,4 | 1,1 | 5 | 11,5 | 4 | 61.1 | 0 | 0 | 5 | 15,2 | 4 | 32 | 0 | 29,1 | 5 | 16,2 | 4 | 14 | 18 |

Tableau VIIb :

| Ex. | g | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|
| | | | | | Y | L* | a* | b* | Y | L* | a* | b* | Y | L* | a* | b* |
| 66 | 37 | 3 | 4 | 8 | 36,5 | 80 | -6 | -0,8 | 6,7 | 31,1 | -3,9 | -0,9 | 2,9 | 19,6 | 12,8 | -9 |
| 67 | 37 | 3 | 4 | 8 | 36,5 | 80 | -6 | -0,8 | 6,7 | 31,1 | -3,9 | -0,9 | 2,9 | 19,6 | 12,8 | -9 |

Tableau VIIIa :

| Ex. | D1 | M | IR1 | B | D2a | | ABS | D2b | | M | IR2 | B | D3 | | | M | IR3 | B | D4 | |
|---|---|---|---|---|---|---|---|---|---|---|---|---|---|---|---|---|---|---|---|---|
| | ZSO5 | ZnO | Ag | AZO | ZSO5 | SiN | NiCrW | SiN | ZSO5 | ZnO | Ag | AZO | ZSO5 | SiN | ZSO5 | ZnO | Ag | AZO | ZSO5 | SiN |
| 68 | 17,7 | 5 | 9,2 | 4 | 19 | 20 | 0,8 | 15 | 10 | 5 | 15,1 | 4 | 20 | 20 | 25,8 | 5 | 15,5 | 4 | 14 | 18,9 |

Tableau VIIIb :

| Ex. | g | $\Delta E^*_{TL}$ | $\Delta E^*_{Rc}$ | $\Delta E^*_{Rg}$ | TL | | | | Rg | | | | Rc | | | |
|---|---|---|---|---|---|---|---|---|---|---|---|---|---|---|---|---|
| | | | | | Y | L* | a* | b* | Y | L* | a* | b* | Y | L* | a* | b* |
| 68 | 37,5 | 1,5 | 7,1 | 3,5 | 57 | 80,3 | -5,9 | -1,5 | 5,1 | 27,1 | 1,6 | -5,8 | 4,1 | 24,8 | 5,4 | -13,5 |

**Revendications**

1. Vitrage de contrôle solaire comportant sur au moins l'une des faces d'un substrat verrier un système de couches comprenant au moins une couche absorbant le rayonnement solaire et des couches diélectriques encadrant ladite couche absorbant le rayonnement solaire, **caractérisé en ce que** la couche absorbant le rayonnement solaire est une couche métallique à base de tungstène allié avec au moins du nickel et comprenant du chrome, le système de couches comprenant entre le substrat et la couche absorbant le rayonnement solaire au moins une couche en un matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium, et, au-dessus de la couche absorbant le rayonnement solaire, au moins une couche en un matériau diélectrique à base d'un composé sélectionné parmi l'oxyde de silicium, l'oxyde d'aluminium, le nitrure de silicium, le nitrure d'aluminium, les nitrures mixtes d'aluminium-silicium, l'oxynitrure de silicium et l'oxynitrure d'aluminium.

2. Vitrage selon la revendication 1, tel que la couche métallique absorbant le rayonnement solaire à base de tungstène allié avec au moins du nickel et du chrome comprend également au moins un métal supplémentaire sélectionné parmi le Ti, le Nb, le Zr et le Ta.

3. Vitrage selon une quelconque des revendications précédentes, tel que la couche métallique absorbant le rayonnement solaire comprend de 50 à 90% en poids de tungstène, et du nickel et du chrome dans un rapport en poids de nickel/chrome compris entre 100/0 et 50/50, préférentiellement 80/20.

4. Vitrage selon une quelconque des revendications précédentes, tel que la couche métallique absorbant le rayonnement solaire à base de tungstène allié avec au moins du nickel et du chrome a une épaisseur géométrique d'au moins 2 nm, préférentiellement d'au moins 3 nm, et d'au plus 30 nm, préférentiellement d'au moins 3 nm et d'au plus 25 nm.

5. Vitrage selon la revendication 4, tel que la couche métallique à base de tungstène allié avec au moins du nickel et du chrome a une épaisseur géométrique d'au moins 5 nm, et de préférence d'au moins 6 nm.

**6.** Vitrage selon une quelconque des revendications précédentes, tel que la couche en matériau diélectrique entre le substrat et la couche absorbant le rayonnement solaire à base de tungstène allié avec au moins du nickel et du chrome a une épaisseur optique d'au moins 10 nm et d'au plus 200 nm, préférentiellement d'au moins 40 nm et d'au plus 180 nm.

**7.** Vitrage selon une quelconque des revendications précédentes, tel que la couche en matériau diélectrique située au-dessus de la couche absorbant le rayonnement solaire à base de tungstène allié avec au moins du nickel et du chrome a une épaisseur optique d'au moins 20 nm et d'au plus 200 nm.

**8.** Vitrage selon une quelconque des revendications précédentes, tel que le système de couches comprend au moins deux couches absorbant le rayonnement solaire.

**9.** Vitrage selon une quelconque des revendications précédentes, tel que le système de couches comprend au moins une couche métallique supplémentaire à base d'argent de telle sorte que la ou chaque couche à base d'argent soit entourée d'un revêtement diélectrique.

**10.** Vitrage selon la revendication 9, tel qu'au moins un des revêtements diélectriques comprend au moins deux couches diélectriques et la couche métallique absorbant le rayonnement solaire à base de tungstène allié avec au moins du nickel et du chrome est insérée entre ces deux couches diélectriques de ce revêtement diélectrique.

**11.** Vitrage selon la revendication 10, tel que les deux dites couches diélectriques enserrant la couche métallique absorbant le rayonnement solaire à base de tungstène allié avec au moins du nickel et du chrome sont à base de nitrure de silicium ou de nitrure d'aluminium.

**12.** Vitrage selon la revendication 9, tel que la couche métallique supplémentaire à base d'argent est située dans l'empilement directement sur et/ou sous la couche métallique absorbant le rayonnement solaire à base de tungstène allié avec au moins du nickel et du chrome.

**13.** Vitrage selon l'une quelconque des revendications 1 à 8, tel que le système de couches comprend au moins deux couches métalliques supplémentaires à base d'argent, chaque couche à base d'argent étant située dans l'empilement directement sur et/ou sous la couche métallique absorbant le rayonnement solaire à base de tungstène allié avec au moins du nickel et du chrome.

**14.** Vitrage selon l'une quelconque des revendications 9 à 13, tel que la ou les couches métalliques supplémentaires à base d'argent a ou ont une épaisseur d'au moins 9 nm, préférentiellement d'au moins 13 nm, et d'au plus 23 nm, plus préférentiellement d'au moins 15 nm et d'au plus 22 nm.

**15.** Vitrage selon une quelconque des revendications 9 à 14, tel que la couche métallique absorbant le rayonnement solaire a une épaisseur géométrique comprise entre 0,5 et 8 nm, de préférence, entre 0,5 et 5 nm.

**16.** Vitrage selon une quelconque des revendications précédentes, dont la variation colorimétrique en transmission, $\Delta E^*_{TL}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

**17.** Vitrage selon une quelconque des revendications précédentes dont la variation colorimétrique en réflexion côté face verre, $\Delta E^*_{Rg}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

**18.** Vitrage selon une quelconque des revendications précédentes dont la variation colorimétrique en réflexion côté face couche, $\Delta E^*_{Rc}$ est inférieure à 8, préférentiellement est inférieure à 5, plus préférentiellement est inférieure à 3, lorsque ledit vitrage est soumis à une température d'au moins 630°C et d'au plus 670°C pendant 7 minutes.

**19.** Vitrage selon une quelconque des revendications précédentes dans lequel l'épaisseur de la couche métallique absorbant le rayonnement solaire est choisie de façon à ce que la transmission lumineuse pour un substrat constitué de verre clair de 4 mm d'épaisseur soit au moins égale à 2% et au plus égale à 75%.

**20.** Vitrage selon une quelconque des revendications précédentes dans lequel l'épaisseur optique des couches diélectriques est choisie de manière à ce que la réflexion côté couche soit d'au moins 1% et d'au plus 40%.

**21.** Vitrage selon une quelconque des revendications précédentes, **caractérisé en ce que** la réflexion lumineuse mesurée du côté substrat est d'au moins 27%, de préférence d'au moins 30%, et avantageusement d'au moins 35%.

**22.** Vitrage selon une quelconque des revendications précédentes, **caractérisé en ce que** la réflexion lumineuse mesurée du côté substrat est au moins 2 fois, de préférence au moins 2,5 fois, et avantageusement au moins 3 fois supérieure à la réflexion lumineuse mesurée du côté du système de couches.

**23.** Vitrage selon la revendication 11, **caractérisé en ce que** le système de couches comprend la succession suivante : couche de nitrure de silicium ou de nitrure d'aluminium / couche absorbant le rayonnement solaire / couche de nitrure de silicium ou de nitrure d'aluminium / couche d'oxyde transparent intercalaire à base d'oxyde de Zn, Sn Ti ou Zr, ou leur mélange, différente de la couche de mouillage / couche de mouillage à base d'oxyde de zinc / couche métallique supplémentaire à base d'argent.

**24.** Vitrage selon la revendication 23, **caractérisé en ce que** la couche métallique absorbant le rayonnement solaire a une épaisseur géométrique comprise entre 0,5 et 8 nm, de préférence, entre 0,5 et 5 nm.

**25.** Vitrage selon une quelconque des revendications 23 ou 24, **caractérisé en ce que** l'oxyde transparent intercalaire est un oxyde mixte zinc-étain ou un oxyde mixte titane-zirconium, de préférence un oxyde mixte zinc-étain ayant au moins 20% d'étain et 10% de zinc.

**26.** Utilisation d'un vitrage de contrôle solaire selon une quelconque des revendications précédentes comme élément vitré de véhicule automobile, comme élément de vitrage de bâtiments ou comme élément vitré d'un appareil électroménager tel qu'une porte de four de cuisson.

**Patentansprüche**

**1.** Sonnenschutzverglasung, die auf mindestens einer der Flächen eines Glassubstrats ein Schichtsystem aufweist, das mindestens eine Sonnenstrahlung absorbierende Schicht und dielektrische Schichten umfasst, welche die Sonnenstrahlung absorbierende Schicht einschließen, **dadurch gekennzeichnet, dass** es sich bei der Sonnenstrahlung absorbierenden Schicht um eine Metallschicht auf der Basis von Wolfram handelt, das zumindest mit Nickel legiert ist und Chrom umfasst, wobei das Schichtsystem zwischen dem Substrat und der Sonnenstrahlung absorbierenden Schicht mindestens eine Schicht aus einem dielektrischen Material auf der Basis einer Verbindung, die aus Siliciumoxid, Aluminiumoxid, Siliciumnitrid, Aluminiumnitrid, gemischten Aluminium-Silicium-Nitriden, Siliciumoxynitrid und Aluminiumoxynitrid ausgewählt ist, und oberhalb der Sonnenstrahlung absorbierenden Schicht mindestens eine Schicht aus einem dielektrischen Material auf der Basis einer Verbindung umfasst, die aus Siliciumoxid, Aluminiumoxid, Siliciumnitrid, Aluminiumnitrid, gemischten Aluminium-Silicium-Nitriden, Siliciumoxynitrid und Aluminiumoxynitrid ausgewählt ist.

**2.** Verglasung nach Anspruch 1, wobei die Sonnenstrahlung absorbierende Metallschicht auf der Basis von Wolfram, das zumindest mit Nickel und Chrom legiert ist, darüber hinaus mindestens ein zusätzliches Metall umfasst, das aus Ti, Nb, Zr und Ta ausgewählt ist.

**3.** Verglasung nach einem der vorhergehenden Ansprüche, wobei die Sonnenstrahlung absorbierende Metallschicht 50 bis 90 Gew.-% Wolfram und Nickel und Chrom in einem Nickel:Chrom-Gewichtsverhältnis zwischen 100:0 und 50:50, vorzugsweise 80:20, umfasst.

**4.** Verglasung nach einem der vorhergehenden Ansprüche, wobei die Sonnenstrahlung absorbierende Metallschicht auf der Basis von Wolfram, das zumindest mit Nickel und Chrom legiert ist, eine geometrische Dicke von mindestens 2 nm, vorzugsweise mindestens 3 nm und höchstens 30 nm, vorzugsweise mindestens 3 nm und höchstens 25 nm, aufweist.

**5.** Verglasung nach Anspruch 4, wobei die Metallschicht auf der Basis von Wolfram, das zumindest mit Nickel und Chrom legiert ist, eine geometrische Dicke von mindestens 5 nm und vorzugsweise mindestens 6 nm aufweist.

**6.** Verglasung nach einem der vorhergehenden Ansprüche, wobei die Schicht aus einem dielektrischen Material zwischen dem Substrat und der Sonnenstrahlung absorbierenden Schicht auf der Basis von Wolfram, das zumindest mit Nickel und Chrom legiert ist, eine optische Dicke von mindestens 10 nm und höchstens 200 nm, vorzugsweise mindestens 40 nm und höchstens 180 nm, aufweist.

**7.** Verglasung nach einem der vorhergehenden Ansprüche, wobei die Schicht aus einem dielektrischen Material, die oberhalb der Sonnenstrahlung absorbierenden Schicht auf der Basis von Wolfram angeordnet ist, das zumindest mit Nickel und Chrom legiert ist, eine optische Dicke von mindestens 20 nm und höchstens 200 nm aufweist.

**8.** Verglasung nach einem der vorhergehenden Ansprüche, wobei das Schichtsystem mindestens zwei Sonnenstrahlung absorbierende Schichten umfasst.

**9.** Verglasung nach einem der vorhergehenden Ansprüche, wobei das Schichtsystem mindestens eine zusätzliche Metallschicht auf Silberbasis so umfasst, dass die oder jede Schicht auf Silberbasis von einem dielektrischen Belag umgeben ist.

**10.** Verglasung nach Anspruch 9, wobei mindestens einer der dielektrischen Beläge mindestens zwei dielektrische Schichten umfasst und die Sonnenstrahlung absorbierende Metallschicht auf der Basis von Wolfram, das zumindest mit Nickel und Chrom legiert ist, zwischen diesen beiden dielektrischen Schichten dieses dielektrischen Belags angeordnet ist.

**11.** Verglasung nach Anspruch 10, wobei die beiden dielektrischen Schichten, welche die Sonnenstrahlung absorbierende Metallschicht auf der Basis von Wolfram, das zumindest mit Nickel und Chrom legiert ist, einschließen, auf Siliciumnitrid oder Aluminiumnitrid basieren.

**12.** Verglasung nach Anspruch 9, wobei sich die zusätzliche Metallschicht auf Silberbasis im Stapel direkt auf und/oder unter der Sonnenstrahlung absorbierenden Metallschicht auf der Basis von Wolfram, das zumindest mit Nickel und Chrom legiert ist, befindet.

**13.** Verglasung nach einem der Ansprüche 1 bis 8, wobei das Schichtsystem mindestens zwei zusätzliche Metallschichten auf Silberbasis umfasst, wobei sich jede Schicht auf Silberbasis im Stapel direkt auf und/oder unter der Sonnenstrahlung absorbierenden Metallschicht auf der Basis von Wolfram, das zumindest mit Nickel und Chrom legiert ist, befindet.

**14.** Verglasung nach einem der Ansprüche 9 bis 13, wobei die zusätzliche Metallschicht bzw. die zusätzlichen Metallschichten auf Siberbasis eine Dicke von mindestens 9 nm, vorzugsweise mindestens 13 nm und höchstens 23 nm, bevorzugter mindestens 15 nm und höchstens 22 nm aufweist bzw. aufweisen.

**15.** Verglasung nach einem der Ansprüche 9 bis 14, wobei die Sonnenstrahlung absorbierende Metallschicht eine geometrische Dicke zwischen 0,5 und 8 nm, vorzugsweise zwischen 0,5 und 5 nm, aufweist.

**16.** Verglasung nach einem der vorhergehenden Ansprüche, deren kolorimetrische Änderung der Transmission, $\Delta E^*_{TL}$, kleiner als 8, vorzugsweise kleiner als 5, bevorzugter kleiner als 3, ist, wenn eine Temperatur von mindestens 630 °C und höchstens 670 °C 7 Minuten lang auf die Verglasung einwirken gelassen wird.

**17.** Verglasung nach einem der vorhergehenden Ansprüche, deren kolorimetrische Änderung der Reflexion von der Glasvorderseite, $\Delta E^*_{Rg}$, kleiner als 8, vorzugsweise kleiner als 5, bevorzugter kleiner als 3, ist, wenn eine Temperatur von mindestens 630 °C und höchstens 670 °C 7 Minuten lang auf die Verglasung einwirken gelassen wird.

**18.** Verglasung nach einem der vorhergehenden Ansprüche, deren kolorimetrische Änderung der Reflexion von der Schichtvorderseite, $\Delta E^*_{Rc}$, kleiner als 8, vorzugsweise kleiner als 5, bevorzugter kleiner als 3, ist, wenn eine Temperatur von mindestens 630 °C und höchstens 670 °C 7 Minuten lang auf die Verglasung einwirken gelassen wird.

**19.** Verglasung nach einem der vorhergehenden Ansprüche, wobei die Dicke der Sonnenstrahlung absorbierenden Metallschicht so ausgewählt ist, dass die Lichtdurchlässigkeit für ein aus Klarglas bestehendes Substrat mit einer Dicke von 4 mm mindestens gleich 2 % und höchstens gleich 75 % beträgt.

**20.** Verglasung nach einem der vorhergehenden Ansprüche, wobei die optische Dicke der dielektrischen Schichten so ausgewählt ist, dass die schichtseitige Reflexion mindestens 1 % und höchstens 40 % beträgt.

21. Verglasung nach einem der vorhergehenden Ansprüche, **dadurch gekennzeichnet, dass** die auf der Substratseite gemessene Lichtreflexion mindestens 27 %, vorzugsweise mindestens 30 % und vorteilhafterweise mindestens 35 % beträgt.

22. Verglasung nach einem der vorhergehenden Ansprüche, **dadurch gekennzeichnet, dass** die auf der Substratseite gemessene Lichtreflexion um mindestens 2-mal, vorzugsweise mindestens 2,5-mal und vorteilhafterweise mindestens 3-mal höher als die auf der Seite des Schichtsystems gemessene Lichtreflexion ist.

23. Verglasung nach Anspruch 11, **dadurch gekennzeichnet, dass** das Schichtsystem die folgende Reihenfolge umfasst: Siliciumnitrid- oder Aluminiumnitrid-Schicht / Sonnenstrahlung absorbierende Schicht / Siliciumnitrid- oder Aluminiumnitrid-Schicht / transparente Oxid-Zwischenschicht auf der Basis eines Oxids von Zn, Sn, Ti oder Zr oder deren Mischung, die von der Benetzungsschicht verschieden ist / Benetzungsschicht auf Zinkoxidbasis / zusätzliche Metallschicht auf Silberbasis.

24. Verglasung nach Anspruch 23, **dadurch gekennzeichnet, dass** die Sonnenstrahlung absorbierende Metallschicht eine geometrische Dicke zwischen 0,5 und 8 nm, vorzugsweise zwischen 0,5 und 5 nm, aufweist.

25. Verglasung nach einem der Ansprüche 23 oder 24, **dadurch gekennzeichnet, dass** es sich beim transparenten Zwischenschicht-Oxid um ein Zink-Zinn-Mischoxid oder ein Titan-Zirkonium-Mischoxid, vorzugsweise um Zink-Zinn-Mischoxid handelt, das mindestens 20 % Zinn und 10 % Zink aufweist.

26. Verwendung einer Sonnenschutzverglasung nach einem der vorhergehenden Ansprüche als Kraftfahrzeug-Glaselement, als Gebäudeverglasungselement oder als Glaselement eines elektrischen Haushaltsgeräts, wie eine Backofenklappe.

**Claims**

1. Solar-control glazing including on at least one of the faces of a glass substrate a layer system comprising at least one solar-radiation-absorbing layer and dielectric layers surrounding said solar-radiation-absorbing layer, **characterized in that** the solar-radiation-absorbing layer is a metallic layer based on tungsten alloyed with at least nickel and comprising chromium, the layer system comprising, between the substrate and the solar-radiation-absorbing layer, at least one layer made of a dielectric material based on a compound selected from silicon oxide, aluminium oxide, silicon nitride, aluminium nitride, mixed aluminium-silicon nitrides, silicon oxynitride and aluminium oxynitride, and, over the solar-radiation-absorbing layer, at least one layer made of a dielectric material based on a compound selected from silicon oxide, aluminium oxide, silicon nitride, aluminium nitride, mixed aluminium-silicon nitrides, silicon oxynitride and aluminium oxynitride.

2. Glazing according to Claim 1, such that the solar-radiation-absorbing metallic layer based on tungsten alloyed with at least nickel and chromium also comprises at least one additional metal selected from Ti, Nb, Zr and Ta.

3. Glazing according to either of the preceding claims, such that the solar-radiation-absorbing metallic layer comprises from 50% to 90% by weight of tungsten, and nickel and chromium in a nickel/chromium weight ratio of between 100/0 and 50/50, preferentially 80/20.

4. Glazing according to any one of the preceding claims, such that the solar-radiation-absorbing metallic layer based on tungsten alloyed with at least nickel and chromium has a geometrical thickness of at least 2 nm, preferentially of at least 3 nm and of not more than 30 nm, preferentially of at least 3 nm and of not more than 25 nm.

5. Glazing according to Claim 4, such that the metallic layer based on tungsten alloyed with at least nickel and chromium has a geometrical thickness of at least 5 nm and preferably of at least 6 nm.

6. Glazing according to any one of the preceding claims, such that the layer of dielectric material between the substrate and the solar-radiation-absorbing layer based on tungsten alloyed with at least nickel and chromium has an optical thickness of at least 10 nm and of not more than 200 nm, preferentially of at least 40 nm and of not more than 180 nm.

7. Glazing according to any one of the preceding claims, such that the layer of dielectric material located over the solar-radiation-absorbing layer based on tungsten alloyed with at least nickel and chromium has an optical thickness of at least 20 nm and of not more than 200 nm.

8. Glazing according to any one of the preceding claims, such that the layer system comprises at least two solar-radiation-absorbing layers.

9. Glazing according to any one of the preceding claims, such that the layer system comprises at least one additional silver-based metallic layer such that the or each silver-based layer is surrounded by a dielectric coating.

10. Glazing according to Claim 9, such that at least one of the dielectric coatings comprises at least two dielectric layers and the solar-radiation-absorbing metallic layer based on tungsten alloyed with at least nickel and chromium is inserted between these two dielectric layers of this dielectric coating.

11. Glazing according to Claim 10, such that the two said dielectric layers sandwiching the solar-radiation-absorbing metallic layer based on tungsten alloyed with at least nickel and chromium are based on silicon nitride or aluminium nitride.

12. Glazing according to Claim 9, such that the additional silver-based metallic layer is located in the stack directly over and/or under the solar-radiation-absorbing metallic layer based on tungsten alloyed with at least nickel and chromium.

13. Glazing according to any one of Claims 1 to 8, such that the layer system comprises at least two additional silver-based metallic layers, each silver-based layer being located in the stack directly over and/or under the solar-radiation-absorbing metallic layer based on tungsten alloyed with at least nickel and chromium.

14. Glazing according to any one of Claims 9 to 13, such that the additional silver-based metallic layer(s) have a thickness of at least 9 nm, preferentially of at least 13 nm and of not more than 23 nm, more preferentially of at least 15 nm and of not more than 22 nm.

15. Glazing according to any one of Claims 9 to 14, such that the solar-radiation-absorbing metallic layer has a geometrical thickness of between 0.5 and 8 nm and preferably between 0.5 and 5 nm.

16. Glazing according to any one of the preceding claims, in which the colorimetric variation in transmission, $\Delta E^*_{TL}$, is less than 8, preferentially less than 5, more preferentially less than 3, when said glazing is subjected to a temperature of at least 630°C and of not more than 670°C for 7 minutes.

17. Glazing according to any one of the preceding claims, in which the colorimetric variation in glass-side reflection, $\Delta E^*_{Rg}$, is less than 8, preferentially less than 5, more preferentially less than 3, when said glazing is subjected to a temperature of at least 630°C and of not more than 670°C for 7 minutes.

18. Glazing according to any one of the preceding claims, in which the colorimetric variation in layer-side reflection, $\Delta E^*_{Rl}$, is less than 8, preferentially less than 5, more preferentially less than 3, when said glazing is subjected to a temperature of at least 630°C and of not more than 670°C for 7 minutes.

19. Glazing according to any one of the preceding claims, in which the thickness of the solar-radiation-absorbing metallic layer is chosen so that the light transmission for a substrate consisting of clear glass 4 mm thick is at least equal to 2% and not more than 75%.

20. Glazing according to any one of the preceding claims, in which the optical thickness of the dielectric layers is chosen so that the layer-side reflection is at least 1% and not more than 40%.

21. Glazing according to any one of the preceding claims, **characterized in that** the substrate-side measured light reflection is at least 27%, preferably at least 30% and advantageously at least 35%.

22. Glazing according to any one of the preceding claims, **characterized in that** the light reflection measured on the substrate side is at least 2 times, preferably at least 2.5 times and advantageously at least 3 times greater than the light reflection measured on the layer-system side.

**23.** Glazing according to Claim 11, **characterized in that** the layer system comprises the following succession: layer of silicon nitride or of aluminium nitride/solar-radiation-absorbing layer/layer of silicon nitride or of aluminium nitride/layer of intercalating transparent oxide based on Zn, Sn, Ti or Zr oxide, or a mixture thereof, different from the wetting layer/wetting layer based on zinc oxide/additional silver-based metallic layer.

**24.** Glazing according to Claim 23, **characterized in that** the solar-radiation-absorbing metallic layer has a geometrical thickness of between 0.5 and 8 nm and preferably between 0.5 and 5 nm.

**25.** Glazing according to either of Claims 23 and 24, **characterized in that** the intercalating transparent oxide is a mixed zinc-tin oxide or a mixed titanium-zirconium oxide, preferably a mixed zinc-tin oxide containing at least 20% tin and 10% zinc.

**26.** Use of a solar-control glazing according to any one of the preceding claims, as a glazed element of a motor vehicle, as a glazing element of buildings or as a glazed element of a household electrical appliance such as an oven door.

**EP 2 956 421 B1**

## RÉFÉRENCES CITÉES DANS LA DESCRIPTION

### Documents brevets cités dans la description

- DE 3543178 A1